# EUROPEAN PATENT SPECIFICATION

(11) **EP 2 103 365 B1**
(45) Date of publication and mention of the grant of the patent: **16.09.2015**
(21) Application number: 09002525.5
(22) Date of filing: 23.02.2009
(51) Int. Cl.: B23B 27/22, B23Q 11/00, B23B 27/16, B23B 29/12, B23B 29/04

(54) **Machine tool with chip processing function**
Werkzeugmaschine mit Spanbearbeitungsfunktion
Machine-outil avec fonction de traitement de copeau

(30) Priority: 29.02.2008 JP 2008050698
(43) Date of publication of application: 23.09.2009
(60) Divisional application: 10157299.8
(73) Proprietor: National University Corporation Nagoya University, Nagoya-shi, Aichi 464-8601 (JP); Murata Machinery, Ltd., Minami-ku Kyoto-shi Kyoto 601-8326 (JP)
(72) Inventor: Shamoto, Eiji, Nagoya-shi Aichi 464-8601 (JP); Koide, Tomio, Inuyama-shi Aichi 484-8502 (JP)
(74) Representative: Zimmermann, Tankred Klaus

(56) References cited:
- EP-A- 1 375 036
- DE-A1- 10 002 108
- JP-A- 58 071 008
- SU-A1- 831 393
- SU-A1- 1 313 568
- US-A- 1 130 275
- US-A- 1 864 889
- US-A- 3 109 915
- US-A- 4 080 817
- US-A- 4 271 734
- US-A- 5 725 334
- US-A- 5 771 763

## Description

### Field of the Invention

The present invention relates to a machine tool with a chip guiding function which is used for turning operation or the like, and in particular, to a machine tool with a chip processing function which is suitable for ductile materials.

Such a machine tool is known from US 4 271 734 A1, which represents the closest prior art to the subject-matter of claim 1.

### Background of the Invention

In recent years, with developed mass production and improved performance of industrial products, there has been a demand for increased efficiency and precision of cutting operation. To meet the demand, appropriate control of chips and an increase in cutting speed are required. In connection with the cutting operation, chip controllability, tool life, cutting resistance, and machining accuracy are called four machinability items. Efforts have been made to improve each of the items. In particular, poor chip controllability is the worst factor hindering automation because of entangled chips and the like.

To improve the chip controllability, a chip breaker is generally used to heavily curl and destroy a chip into pieces (see, for example, "NC Machine Tool Usage Manual" edited by Tool Engineer editorial department of the Publishing Taiga Shuppan Co, Ltd, September 10, 1990, pp. 94-95). Furthermore, a configuration has been proposed in which a hollow guide path for chips composed of a cover, a pipe, or the like is formed on a rake face of a cutting tool (see, for example, the Unexamined Japanese Patent Application Publication (Tokkai-Sho) No. 52-142379). A cut-off tool has been proposed which includes a guide groove formed in a rake face and through which the chip is passed all over the width thereof. Additionally, a cutting tool for counter boring has been proposed in which an edge portion leading to a cutting edge line is provided in the center of a rake face to prevent the chip from being rolled (see the Unexamined Japanese Patent Application Publication (Tokkai-Hei) No. 7-237005).

Furthermore, to reduce the cutting resistance, a technique of performing cutting operation while pulling the chip has been proposed (see "Effects of Tension on Chips during Cutting" Kazuo NAKAYAMA, Precision Machine, 30-1 (1964), pp. 46-52). When a cutting speed is increased to allow the cutting operation to be efficiently achieved, the quantity of cutting heat increases to reduce the tool life. Thus, the condition of a finished surface is degraded. To prevent this, cutting oil may be used. However, the use of the cutting oil may disadvantageously affect environments. The above-described technique of performing cutting operation while pulling the chip is expected to be effective for reducing the cutting resistance and the cutting heat and thus the wear of the tool.

With the chip breaker, a chip needs to be somewhat fragile so that the force of flow of the chip can be utilized to curl and destroy the chip into pieces. Thus, the chip breaker often fails to act on ductile materials such as steel used for press working and heat resistant alloys. This may result in the entangled chip or the damaged finished surface. Furthermore, even where the chip breaker functions properly, the cutting resistance varies periodically, possibly posing a vibration problem or reducing the machining accuracy.

The technique of forming, in the rake face of the cutting tool, the hollow guide path composed of a cover, a pipe, or the like or the guide groove through which a chip is passed is effective provided that a chip of the same width always flows in the same direction without being heavily curled. However, the width, direction, and curling of the chip vary depending on cutting conditions. If the width of the hollow guide path or guide groove is increased to allow for variation in chip width, the chip may be curled in the hollow guide path or guide groove. Furthermore, the flow direction of the chip also varies depending on cutting conditions. Thus, if the hollow guide path or guide groove has a narrow inlet, the chip is likely to be caught at the inlet. On the contrary, even if the inlet is enlarged, the chip may come into angled contact with the inner wall surface of the hollow guide path or guide groove and be caught thereon. Thus, the chip is jammed in the hollow guide path or guide groove. Consequently, putting the hollow guide path or guide groove to practical use is difficult.

The technique of providing the edge line portion in the center of the rake face is effective only on the counter boring for preventing the chip from being rolled. The technique cannot be applied to general turning operations. That is, in the counter boring processing, the original flow direction, width, and occurrence position of the chip are fixed. An edge portion leading along the chip flow direction to the cutting edge line is provided in the center of the chip. Thus, this technique fails to act on the general turning operations, in which the original flow direction, width, and occurrence position of the chip vary depending on the machining conditions.

In normal cutting, the chip flows in a spiral form. This is because a sideward curl and an upward curl occur during formation of the chip. The upward curl is perpendicular to the rake face and results from a secondary flow of the chip in the vicinity of the rake face of the tool caused by friction between the chip and the rake face. The sideward curl is parallel to the rake face and results from a sideward flow of a free surface side of the chip during generation of the chip.

Each curl direction is combined with the flow direction to determine a flow path for the chip. As described above, the cause of the curl varies with the type of the curl. Thus, the upward and sideward curls need to be separately dealt with in order to correct the curled chip. Furthermore, to regulate the flow path for the chip, not only each curl direction but also the flow direction needs to be regulated.

On the other hand, the results of basic studies indicate the technique of performing while pulling the chip is effective for reducing the cutting resistance. However, since no practical method for pulling the chip is available, the technique has not been put to practical use for a long time.

Even where for example, a roller sandwichingly feeding the chip is provided as means for pulling the chip, the flow path for the chip needs to be regulated in order to allow a tip portion of the chip to be guided to the roller during the initial period of formation of the chips. Without the regulation, the roller fails to catch the tip portion of the chip and thus cannot be put to practical use. Since the chip may be curled and the flow direction may vary depending on the cutting conditions or the like, regulating the flow path is difficult.

Provided that a ductile chip can be guided to a desire position without the need to destroy the chip into pieces, not only consecutive chip processing but also a technique of performing cutting with the chip under tension can be achieved. Then, the cutting resistance, required power, resulting heat, and the like can be reduced to improve the machinability in general. At the same time, cutting efficiency can be improved, and the tool life can be prolonged.

US 4,271,734 A relates to an apparatus for guiding a continuous chip formed in lathing. The apparatus can guide the chip smoothly without jamming. The apparatus has a guide member mounted on or integral with a cutting tool. The guide path is provided in the guide member for passing the chip, and the guide path has an inlet in the vicinity of the cutting edge of the cutting tool and an outlet remote from the cutting edge. The continuous chip is taken up around take-up rods which are placed under rotating motion by a motor through a friction coupling, which enables chip take-up with a substantially constant tension regardless of the variation in the flow speed of the chip or of the increase of winding diameter around said take-up rods.

SU 831,393 A1 describes a cutting blade.

JP 58-071,008 A describes a cutting tool having a cutting tool main body provided with a chip former of an imitative shape of a flute of a twist drill. The chip former is provided with a rake angle receptacle in parallel with said former so that chips are discharged downward to the rear of the cutting tool main body. When a work piece is cut chips separated from the work piece are forcibly curved by means of the chip former through its wrapping manner, and wound like a coil to be discharged backward.

US 5,771,763 A describes an edge rounded cutting tool insert which shows less flank wear in the nose area and improved toughness behavior on the main cutting edge. The improved toughness and decreased flank wear is achieved by decreasing the W/H ratio and increasing H from the nose area to the middle of the main cutting edge wherein W is the width of edge rounding of the cutting edge along the rake face and H is the width of edge rounding of the cutting edge along the clearance face.

An object of the present invention is to provide a machine tool with a chip processing function which enables the sideward curl to be corrected without causing a jam, thus allowing the chip to be guided in a desired direction, the machine tool enabling consecutive chip processing and reducing the cutting resistance, required power, resulting heat, and the like to provide improved cutting efficiency and prolonged tool life.

This object is achieved by a machine tool of claim 1.

The present invention enables the chip to be more reliably guided to a tensile force applying means.

Advantageously, the machine tool of the invention the present invention performs such control that allows the tensile force applying means to reliably catch the tip portion of the chip even with a change in the cutting conditions.

Advantageously, the machine tool of the invention provides a machine tool with a chip control function which performs such control as allows the chip to be guided in a desired direction and enables consecutive chip control, the machine tool reducing the cutting resistance, required power, resulting heat, and the like to provide improved cutting efficiency and prolonged tool life.

Advantageously, the machine tool of the invention allows the chip to be continuously fed under tension and also to allow appropriate tension to be easily applied.

The present invention allows friction between the chip and the rake face to be offset by a tensile force to enable a more effective reduction in cutting resistance.

The present invention facilitates processing of the chip and increases the range of available options for a chip processing means.

### Summary of the Invention

A first embodiment of the present invention provides a machine tool with a chip processing function which brings a cutting tool into abutting contact with a workpiece for cutting, the machine tool comprising a tensile force applying means provided on or in a vicinity of the cutting tool to apply a tensile force to a chip continuing from the workpiece and flowing from a cutting edge of the cutting tool, and a chip guiding means for guiding the chip to the tensile force applying means, wherein as the chip guiding means, the machine tool includes guide shape portion extending linearly away from a cutting edge line located at an edge of a rake face or a vicinity of the cutting edge line with respect to the cutting edge line to guide the chip, and the guide shape portion has a smaller width than the chip and is recessed or projected with respect to the rake face, and wherein a part of the chip flowing onto the rake face is plastically deformed during generation of the chip, and the guide shape portion fits the plastically deformed portion to guide the chip. The guide shape portion may be a groove or a protrusion.

In this embodiment, the chip guiding means is provided to guide the chip to the tensile force applying means, thus allowing processing to be performed with the chip under tension. Thus, consecutive chip processing can be carried out even on ductile materials such as press steel, heat resistant alloys, and soft aluminum on which the chip breaker fails to act. Since chip controllability is improved, automation for the ductile materials is facilitated, thus improving yield and machining accuracy. Furthermore, a technique of performing cutting with the chip under tension can be implemented. The cutting resistance, required power, resulting heat, and the like which are associated with friction can be reduced to improve the machinability in general.

At the same time, the cutting efficiency can be improved, and the tool life can be prolonged. The prolonged tool life resulting from the reduced cutting resistance means, in the opposite sense, that with the tool life remaining unchanged, faster or heavier cutting can be achieved. The present embodiment thus increases efficiency compared to the conventional art. Furthermore, where a cutting-direction component (radial force) of a cutting force is offset by the tensile force, the amount of cut is prevented from varying depending on the cutting force. This significantly contributes to improving the machining accuracy.

Since the recessed or projected guide shape portion having the smaller width than the chip is provided, where the workpiece is pressed against the rake face for cutting to form the flowing chip, a part of a surface of the chip which contacts with the rake face is plastically deformed by the guide shape portion. The plastically deformed portion fits the guide shape portion to allow the chip to be guided. Thus, the flow direction and sideward curl of the chip are corrected. When the guide shape portion is the groove, a protrusion-shaped plastically deformed portion is formed on the surface of the chip which contacts with the rake face. The protrusion-shaped plastically deformed portion is fitted into the guide shape portion to allow the chip to be guided. When the guide shape portion is the protrusion, a groove-shaped plastically deformed portion is formed in the surface of the chip which contacts with the rake face. The guide shape portion is fitted into the groove-shaped plastically deformed portion to guide the chip.

The guide shape portion creates the plastically deformed portion on the rake face side of the chip so as to fit and guide the chip. Thus, the flow direction and curl of the chip are corrected. Consequently, the chip can be smoothly guided even with variation in chip width.

That is, in a guide path such as a hole or a cover through which the chip is passed, excess width may cause the chip to be curled inside the guide path to come into abutting contact with an inner wall surface of the guide path or may change the flow direction of the chip to cause the chip to be caught at the inlet. This may result in a jam. However, the present technique can prevent such a jam problem. Furthermore, unlike the guide path such as a hole or a cover through which the chip is passed, the guide shape portion plastically deforms and fits the part of the rake face side of the chip. Thus, the guide shape portion not only guides the chip but also corrects the curl and flow direction of the chip.

The plastic deformation of the chip by the guide shape portion is a part of the plastic deformation required to form the chip, and does not prevent the flow of the chip.

The guide shape portion such as the guide groove or guide protrusion may be formed on the cutting edge line. However, the guide shape portion is preferably formed not on the cutting edge line but so as to extend from the vicinity of the cutting edge line because in this case, the guide shape portion avoids degrading a finished surface of a workpiece. Preferably, the depth of the guide groove or the height of the guide protrusion increases gradually with the distance from the cutting edge line, and after reaching a given depth or height, the guide shape portion further extends with the depth or height maintained.

As the chip guiding means, the machine tool includes, in addition to the guide shape portion such as the guide groove, a cover covering the rake face of the cutting tool to form a guide path between the rake face and the cover through which the chip passes.

Where for example, surfaces of a workpiece located in the respective directions are consecutively processed, for example, an angular relationship between the cutting tool and the workpiece surface may vary, preventing the chip from being reliably guided simply by the guide shape portion. In this case, the cover allows the chip to be more reliably guided. Combination of the correction by the guide shape portion such as the guide groove with regulation by the cover prevents the curled chip from being jammed in the guide path compared to the simple use of the cover.

As the chip guiding means, in addition to the guide shape portion such as the guide groove, the rake face may be formed as a projecting curved surface such that a cross section of the rake face which is perpendicular to the cutting edge line is shaped like a projecting curve.

Where the rake face is the projecting curved surface, the chip conforms to the projecting curved surface of the rake face and is inhibited from being curled upward. In conventional tools, the rake face is formed as a recessed curved surface so as to positively curl the chip upward. In contrast, the present invention uses the projecting curved surface to eliminate the upward curl. Owing to the use of the projecting curved surface, the present cutting tool is applicable to turning operations in general, unlike those which use edge lines. Additionally, the upward curl relatively insignificantly affects the guidance of the chip to the desired position. Thus, the rake face has only to be the projecting curved surface where specially required.

As the chip guiding means, the machine tool may include a tool posture changing mechanism changing a posture of the cutting tool, the guide path, the tensile force applying means, or the like with respect to the workpiece, and a tool posture control means for allowing the tool posture changing mechanism to perform a posture changing operation according to a set rule.

The flow direction of the chip varies depending on the cutting conditions. Thus, the tool posture changing mechanism and the tool posture control means are provided to change the posture of the tool or the like depending on the cutting conditions. This enables the tensile force applying means to reliably catch the tip portion of the chip. The set rule is set such that the chip is directed toward the tensile force applying means depending on the cutting conditions. If the posture of the tool or the like is thus controlled, the guide groove need not be provided.

As the chip guiding means, the machine tool may include a guide path member internally forming a guide path through which the chip passes, a guide path posture changing mechanism changing a posture of the guide path member with respect to the workpiece, and a guide path posture control means for allowing the guide path posture changing mechanism to perform a posture changing operation according to a set rule.

Changing the posture of the guide path depending on the cutting conditions also enables the tensile force applying means to reliably catch the tip portion of the chip. Where the posture of the guide path is thus controlled, the guide groove is not provided.

Another embodiment according to the present invention provides a machine tool with a chip processing function which brings a cutting tool into abutting contact with a workpiece for cutting, the machine tool comprising a tensile force applying means provided on or in a vicinity of the cutting tool to apply a tensile force to a chip continuing from the workpiece and flowing from a cutting edge of the cutting tool, and a guiding means for guiding the chip to a chip inlet of the tensile force applying means, and
in that as the chip guiding means, the machine tool includes a chip flow direction control means for regulating, for a driving source allowing the cutting tool to perform cutting and feeding the cutting tool, a relationship between a cut amount and a feed amount according to a set relationship, and the set relationship specifies that a flow direction of the chip determined by the cut amount, the feed amount, and a tool shape is such that the chip is directed to within a range within which the chip can receive a chip tip portion of the tensile force applying means.

The range within which the chip tip portion of the tensile force applying means can be received may be a part of the width of a pair of rollers sandwichingly pulling the chip within which the chip can be sandwiched between the rollers. Furthermore, if an inlet guide is provided on the tensile force applying means, the range is such that the chip can be guided through the inlet guide.

The flow direction of the chip varies depending on the relationship between the cut amount and the feed amount. Thus, by regulating the relationship between the cut amount and the feed amount as described above, the chip can be guided to the tensile force applying means. The period of the control by the chip flow direction control means may be limited to an initial cutting period from start of the cutting until the chip is caught by the tensile force applying means. Thereafter, the relationship between the cut amount and the feed amount can be changed. Alternatively, the chip flow direction control means may perform the control throughout the period of a single cutting process. The control by the chip flow direction control means is used in combination with the guide path, through which the chip is guided. In this case, the chip can be more reliably guided to the tensile force applying means.

The tensile force applying means enables consecutive chip processing, and is effective for reducing the cutting resistance, required power, and the resulting heat as is the case with the first configuration.

In the present invention, the tensile force applying means may comprise a pair of rollers that can rotate with the chip sandwiched between the rollers and a servo motor rotating one of both of the rollers.

The rollers allow the chip to be continuously fed under tension. Furthermore, the servo motor enables speed control and torque control, allowing appropriate tension to be applied.

Where the tensile force applying means comprises the rollers and the servo motor, the machine tool may include a cutting synchronized rotation control means for controlling a rotation speed of the servo motor rotating the rollers so that a speed at which the chip is pulled by rotation of the rollers equals a cutting speed at which the rotating workpiece is cut by the cutting tool.

Making the chip pulling speed and the cutting speed equal allows the tensile force to substantially offset the friction between the chip and the rake face.

Where the tensile force applying means comprises the rollers and the servo motor, the machine tool may include a force sensor measuring a force acting between the cutting tool and the workpiece, and an acting force-based control means for mainly controlling a torque of the servo motor rotating the rollers, according to a detection output from the force sensor.

Where the force sensor is located so as to detect a resultant force acting on the tensile force applying means and the cutting tool, the resultant force is fed back to allow the torque of the servo motor to be operated. This in turn allows the friction between the chip and the rake face to be substantially offset. For example, feedback control is performed so that a detected value from the force sensor approaches zero. Alternatively, where the force sensor is located so as to detect only a force acting on the cutting tool, the servo motor is instructed to offer a torque offsetting the detected value from the force sensor. This allows the friction between the chip and the rake face to be substantially offset.

According to the present invention, the machine tool includes a chip processing means for severing or winding the chip having passed through the tensile force applying means.

Severing or winding the chip facilitates the processing. Since the tensile force is interposed between the tool and the chip processing means, the force of the chip processing means is prevented from acting directly on the portion of the chip which contacts with the tool. The range of available options for the chip processing means can be increased. Furthermore, a distance from the cutting tool to the chip processing means can be easily increased. The location and size of the chip processing means can be more freely determined.

The first embodiment according to the present invention provides the machine tool with the chip processing function comprising the tensile force applying means provided on or in the vicinity of the cutting tool to apply the tensile force to the chip continuing from the workpiece and flowing from the cutting edge of the cutting tool, and the guiding means for guiding the chip to the tensile force applying means. As the chip guiding means, the machine tool includes the guide shape portion extending linearly away from the cutting edge line located at the edge of the rake face or the vicinity of the cutting edge line with respect to the cutting edge line to guide the chip, and the guide shape portion has the smaller width than the chip and is recessed or projected with respect to the rake face. A part of the chip flowing onto the rake face is plastically deformed, and the guide shape portion fits the plastically deformed portion to guide the chip. Thus, the sideward curl can be corrected and the chip can be directed in the desired direction, without causing a jam. Consecutive chip processing can be carried out, and the technique of performing cutting with the chip under tension can be implemented. Consequently, the cutting resistance, required power, resulting heat, and the like which are associated with friction can be reduced to improve the machinability in general. At the same time, the cutting efficiency can be improved, and the tool life can be prolonged.

Where as the chip guiding means, the machine tool includes the cover covering the rake face of the cutting tool to form the guide path between the rake face and the cover through which the chip passes, the chip can be more reliably guided.

Where, as the chip guiding means, the rake face is formed as the projecting curved surface such that the cross section of the rake face which is perpendicular to the cutting edge line is shaped like the projecting curve, the upward curl of the chip can be corrected. Thus, the chip can be more reliably guided to the tensile force applying means.

Where, as the chip guiding means, the machine tool includes the tool posture changing mechanism changing the postures of the cutting tool, the guide path, the tensile force applying means, and the like with respect to the workpiece, and the tool posture control means for allowing the tool posture changing mechanism to perform the posture changing operation according to the set rule, control can be performed such that the tensile force applying means can reliably catch the tip portion of the chip even with a change in the cutting conditions.

Where, as the chip guiding means, the machine tool includes the guide path member internally forming the guide path through which the chip passes, the guide path posture changing mechanism changing the posture of the guide path member with respect to the workpiece, and the guide path posture control means for allowing the guide path posture changing mechanism to perform the posture changing operation according to the set rule, control can also be performed such that the tensile force applying means can reliably catch the tip portion of the chip even with a change in the cutting conditions.

The other embodiment according to the present invention provides the machine tool with the chip processing function comprising the tensile force applying means provided on or in the vicinity of the cutting tool to apply the tensile force to the chip continuing from the workpiece and flowing from the cutting edge of the cutting tool, and the guiding means for guiding the chip to the chip inlet of the tensile force applying means. As the chip guiding means, the machine tool includes the chip flow direction control means for regulating, for the driving source allowing the cutting tool to perform cutting and feeding the cutting tool, the relationship between the cut amount and the feed amount according to the set relationship, and the set relationship is such that the flow direction of the chip determined by the cut amount, the feed amount, and the tool shape is such that the chip is directed to within the range within which the chip tip portion of the tensile force applying means can be received. Thus, control can be performed so as to direct the chip in the desired direction. Consecutive chip processing can be carried out, and the technique of performing cutting with the chip under tension can be implemented. Consequently, the cutting resistance, required power, resulting heat, and the like which are associated with friction can be reduced to improve the machinability in general. At the same time, the cutting efficiency can be improved, and the tool life can be prolonged. Additionally, the chip flow direction also varies depending on the shape (mainly the nose radius) of the tool used. Thus, the set relationship may vary depending on the nose radius or the like.

When the tensile force applying means comprises the pair of rollers that can rotate with the chip sandwiched between the rollers and the servo motor rotating one of both of the rollers, the chip can be continuously fed under tension. Furthermore, the appropriate tension can be easily applied.

In this case, where the machine tool includes the cutting synchronized rotation control means for controlling the rotation speed of the servo motor rotating the rollers so that the speed at which the chip is pulled by the rotation of the rollers equals the cutting speed at which the rotating workpiece is cut by the cutting tool, the friction between the chip and the rake face can be substantially offset by the tensile force. Thus, the cutting resistance can be more effectively reduced.

When the machine tool includes the force sensor on either the cutting tool or the workpiece, and the acting force-based control means for controlling the torque of the servo motor based on the detection output from the force sensor, the friction between the chip and the rake face can also be substantially offset by the tensile force. Thus, the cutting resistance can be more effectively reduced.

When the machine tool includes the chip processing means for severing or winding the chip having passed through the tensile force applying means, the processing of the chip is facilitated. Furthermore, the range of available options for the chip processing means can be increased.

Other features, elements, processes, steps, characteristics and advantages of the present invention will become more apparent from the following detailed description of preferred embodiments of the present invention with reference to the attached drawings.

### Brief Description of the Drawings

Figure 1A is a diagram illustrating a conceptual configuration of a machine tool with a chip processing function according to an embodiment of the present invention, Figure 1B is a perspective view of a tip portion of the cutting tool, and Figure 1C is a front view of a tip and a cover of the cutting tool.
Figure 2 is a perspective view of the cutting tool.
Figures 3A and 3B are plan views of examples of the tip of the cutting tool.
Figures 4A and 4B are enlarged sectional views showing guide grooves in the cutting tool.
Figure 5 is a perspective view of the cutting tool provided with the cover.
Figure 6 is a front view and an exploded plan view showing the cover and the tip.
Figure 7 is a perspective view of the cutting tool provided with a tensile force applying means.
Figure 8 is a front view of the tip and the cover, showing a variation of the guide grooves in the cutting tool.
Figure 9 is an exploded plan view of an example in which a guide path forming member is provided in the cutting tool.
Figure 10 is a diagram illustrating a test method for the guide grooves in the cutting tool.
Figure 11 is a diagram showing test conditions for the tests.
Figure 12 is another diagram illustrating a test method for the cutting tool.
Figure 13 is a diagram showing the results of the tests.
Figure 14 is a photograph showing the test result.
Figure 15 is a diagram illustrating a method for testing on upward curl in the cutting tool.
Figure 16 is another diagram illustrating the test method.
Figure 17 is a graph showing the test results.
Figure 18 is a graph showing the results of simulation of chip stretch cutting.
Figure 19 is a graph showing the results of the simulation with rake angle varied.
Figures 20A and 20B are plan views of examples of the tip corresponding to variations of the cutting tool.
Figure 21A is a partly enlarged sectional view of the cutting tool in Figure 20A, and Figure 21B is a diagram illustrating a relationship between a guide protrusion and the tip in the cutting tool.
Figure 22 is a block diagram showing a conceptual configuration of a machine tool with a chip processing function corresponding to another embodiment of the present invention.
Figure 23 is a front view of a lathe that is a machine tool main body of the machine tool.
Figure 24 is a plan view of the machine tool main body.
Figure 25 is a diagram illustrating an essential part of a conceptual configuration of a machine tool with a chip processing function according to yet another embodiment of the present invention.
Figure 26 is a diagram illustrating a conceptual configuration of a machine tool with a chip processing function according to still another embodiment of the present invention.
Figure 27 is a diagram illustrating a concept of chip direction control in the machine tool with the chip processing function.
Figure 28 is a diagram illustrating an essential part of a conceptual configuration of a machine tool with a chip processing function according to further another embodiment of the present invention.
Figure 29 is a diagram illustrating an essential part of a conceptual configuration of a machine tool with a chip processing function according to further another embodiment of the present invention.

### Detailed Description of the Preferred Embodiments

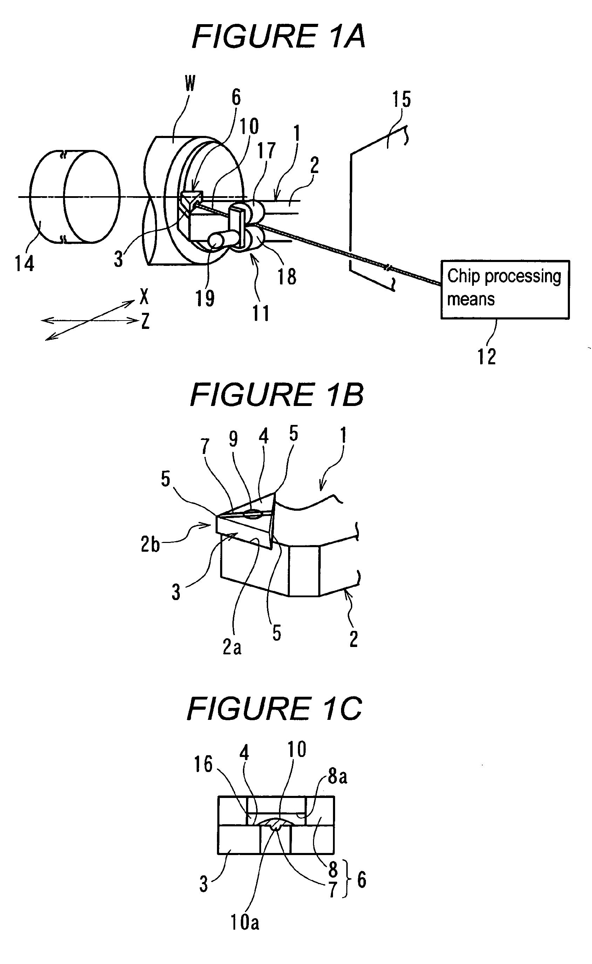

A first embodiment of the present invention will be described with reference to Figures 1 to 22. Figure 1 schematically shows a machine tool with a chip processing function. The machine tool brings a cutting tool 1 into abutting contact with a rotating workpiece W for cutting. The machine tool includes a tensile force applying means 11 for applying a tensile force to a chip 10 continuing with a workpiece W and flowing from a cutting edge line 5 of the cutting tool 1, a chip guiding means 6 for guiding the chip 10 to the tensile force applying means 11, and a chip processing means 12 for processing the chip 10 having passed through the tensile force applying means 11. Furthermore, a guide path (not shown in the drawings) such as a pipe is provided between the tensile force applying means 11 and the chip processing means 12 so that the chip 10 is passed and guided through the guide path. The chip processing means 12 is a device that carries out a process of severing or winding the chip 10.

The workpiece W is rotated by a spindle 14. The cutting tool 1 is attached to a tool rest 15 that is movable in two orthogonal axial directions. The tensile force applying means 11 is provided on or in the vicinity of the cutting tool 1.

The cutting tool 1 is a cutting tool with a chip guiding function which includes the chip guiding means 6. The chip guiding means 6 is composed of a guide groove 7 that is a guide shape portion formed in a rake face 4 and a cover 8 covering the rake face 7. The cover 8 need not be necessarily provided.

The cutting tool 1 is a throw-away turning tool comprising a shank 2 serving as a shank portion, and a tip 3 mounted on a tip mounting seat portion 2a located at a tip portion of the shank 2. The tip mounting seat portion 2a is formed as a cutout recessed portion. The tip 3 is fixed to the shank 2 with a fastener 9 such as a set screw which is inserted through a central mounting hole. The tip 3 is a component serving as a cutting edge and has a triangular planar shape. A surface of the tip 3 which lies opposite a surface thereof attached to the shank 2 makes up the rake face 4. Each corner of the rake face 4 is formed like a circular arc, that is, a circular-arc nose portion is formed at the corner. The circular-arc portion forms a cutting edge line 5. In the tip 3, the cutting edge line 5 located at a use portion 2b corresponding to a leading end of the shank 2 is used for processing. However, where the cutting edge line 5 at the use position is worn away, the tip 3 is removed and re-fixed such that another cutting edge line 5 is located at the use portion 2b. Instead of being formed as the circular-arc corner, the cutting edge line 5 may be formed on each side of the tip 3. Furthermore, the tip 3 may be rectangular.

The cutting tool 1 is not limited to the throw-away cutting tool but may be a tool bit in another form or a solid turning tool (also referred to as a solid tool) made wholly of the same material. However, the throw-away turning tool will be described below by way of example.

The guide groove 7 extends from the vicinity of the cutting edge line 5 to guide the chip 10. The guide groove 7 extends from the vicinity of the corner of the tip 3 to an opposite side. In the present embodiment, the guide groove 7 is formed to become gradually deeper from a position close to the cutting edge line 5. Thus, in the figure, the guide groove 7 is shown continuing from the cutting edge line. However, the guide groove 7 is not formed on the cutting edge line 5. The guide groove 7 becomes gradually deeper from the vicinity of the cutting edge line 5 and then extends at a constant depth. The guide groove 7 need not necessarily continue to the opposite side but may be shaped to become gradually shallower from the middle of the guide groove 7 so as to reach the rake face 4. The guide groove 7 may extend from the cutting edge line 5. However, where the guide groove is formed to extend from the vicinity of the cutting edge line 5 without being formed on the cutting edge line, the guide groove 7 is prevented from degrading a finished surface. This is advantageous for the surface roughness of the finished surface.

The guide groove 7 has a smaller width than the chip 10 so that a rake face-side part 10a of the chip 10 is fitted into the guide groove 7 so as to allow the chip 10 to be guided. The width of the chip 10 varies depending on the amount of cut and the like. However, conditions under which the cutting tool 1 can be used are determined based on a cutting load and machining accuracy. Thus, the range of the width of the chip 10 is determined by using the cutting tool 1 under appropriate use conditions. The width of the guide groove 7 is set to be smaller than that of the chip 10 resulting from the use of the cutting tool 1 under the appropriate use conditions. In the present example, the guide groove 7 extends from the center of the cutting edge line 5 having the circular-arc planar shape.

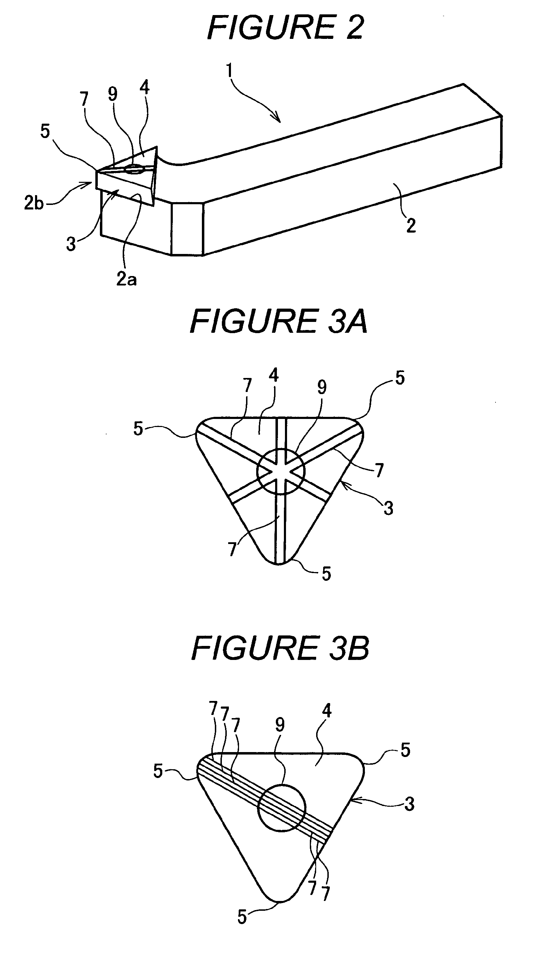

For simplification, Figures 1 and 2 show only the guide groove 7 extending from the cutting edge line 5 located at the use portion. However, in reality, the guide groove 7 is formed so as to extend from all the cutting edge lines 5 located at the respective corners of the tip 3 as shown in Figure 3A. Thus, the guide grooves 7 cross one another in the center of the chip 3. In the present example, the fastener 9 fixing the tip 3 makes up the rake face 4. A part of each of the guide grooves 7 is formed at the position of the fastener 9.

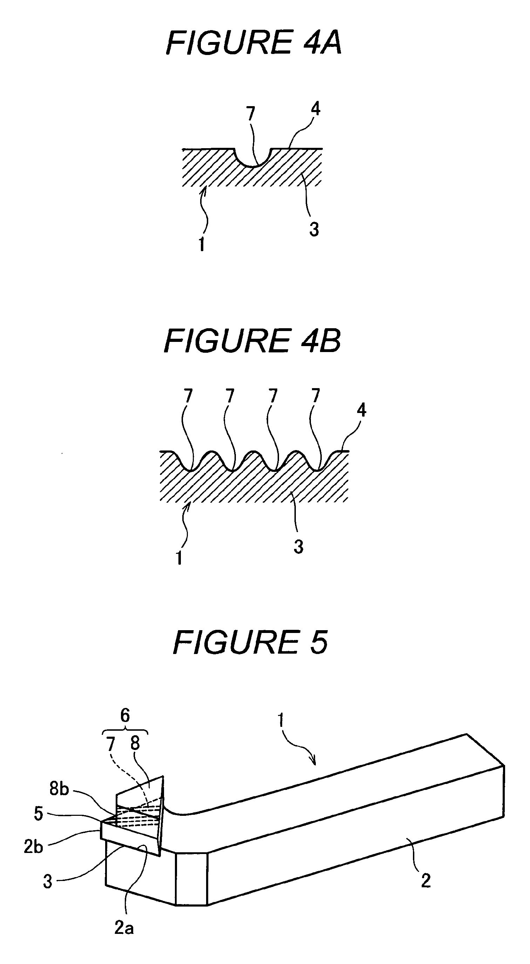

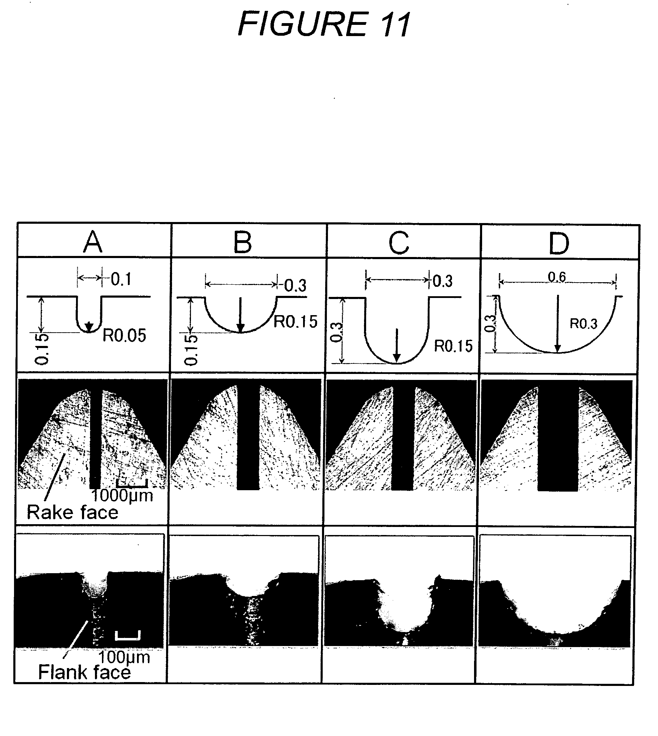

The guide groove 7 has, for example, such a circular-arc sectional shape as shown in Figure 4A. However, as in the case of an example shown in Figure 11, the guide groove 7 may have a cross section in which the internal opposite sides of the groove are parallel to each other and in which a bottom surface of the groove is shaped like a circular arc, or a rectangular cross section. The guide groove 7 is formed by, for example, electric discharge machining.

The guide groove 7 is not limited to a single guide groove, but a plurality of the guide grooves 7 may be formed parallel to one another, for example, as shown in Figures 3B and 4B. For example, the number of the guide grooves 7 may be two or three or at least three. Positions on the rake face 4 where the plurality of guide grooves 7 are formed exhibit a corrugated sectional shape. The entire rake face 4 may exhibit such a corrugated sectional shape. For simplification, Figures 3B and 4B also show only the guide grooves 7 extending from the one cutting edge line 5 located at the corresponding corner. However, the guide groove 7 extends from each of the other cutting edge lines 5 located at the respective corners as in the case of the illustrated portion of the rake face 4. Furthermore, where the plurality of guide grooves 7 are formed in juxtaposition, the width of each of the guide grooves 7 is smaller than that of the chip 10. However, the width of the guide groove group in which the plurality of guide grooves are arranged in juxtaposition may be larger than that of the chip 10.

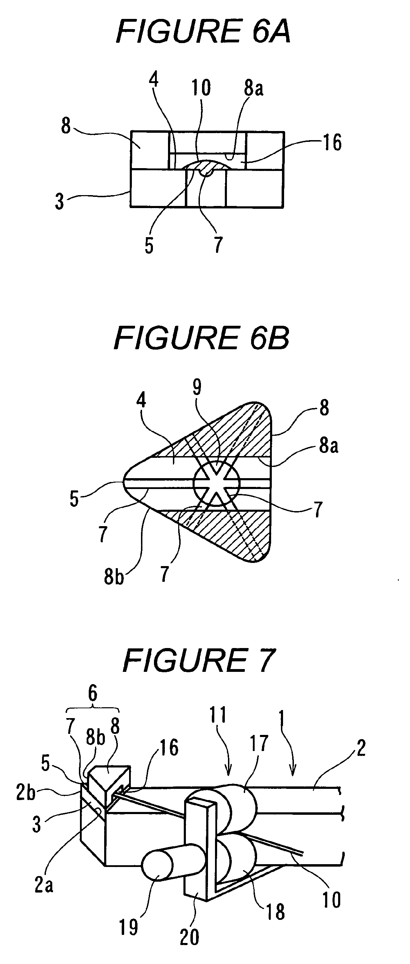

As shown in Figures 5 and 6, the cover 8 is a component that covers the rake face 4 to form a tunnel-like guide path 16 between the cover 8 and the rake face 4 through which the chip 10 passes. For example, a groove 8a is formed on a back surface of the cover 8 so that the guide path 16 is formed between the groove 8a and the rake face 4. The guide path 16 is formed along the guide groove 7 corresponding to the use position 2b of the chip 3. The guide path 16 has a width that allows the chip 3 to pass smoothly through the guide path 16. The cross section of the guide path 16 may be shaped like a rectangle, a semicircle, or the like.

The cover 8 has, for example, substantially the same planar shape as the tip 3. The cover 8 is fixed to the shank 2 with a fastener (not shown in the drawings). When having substantially the same planar shape as the tip 3, the cover 8 is shaped to have an escape portion 8b formed by cutting off the vicinity of the corner corresponding to the use portion 2b of the tip (that is, the corner corresponds to the nose portion), in order to avoid obstructing a cutting operation.

The cover 8 may be formed flat. A wide groove (not shown in the drawings) that is wider than the chip may be formed on the rake face 4 of the tip 3, with the guide groove 7 formed at the bottom of the wide groove. Alternatively, such a wide groove may be formed on both the cover 8 and the tip 3 so that the wide grooves on the opposite sides are combined together to internally form a guide path having sectional dimensions that allow the chip 10 to pass through.

Alternatively, the cover 8 may extend beyond the tip 3 onto a surface of the shank 2.

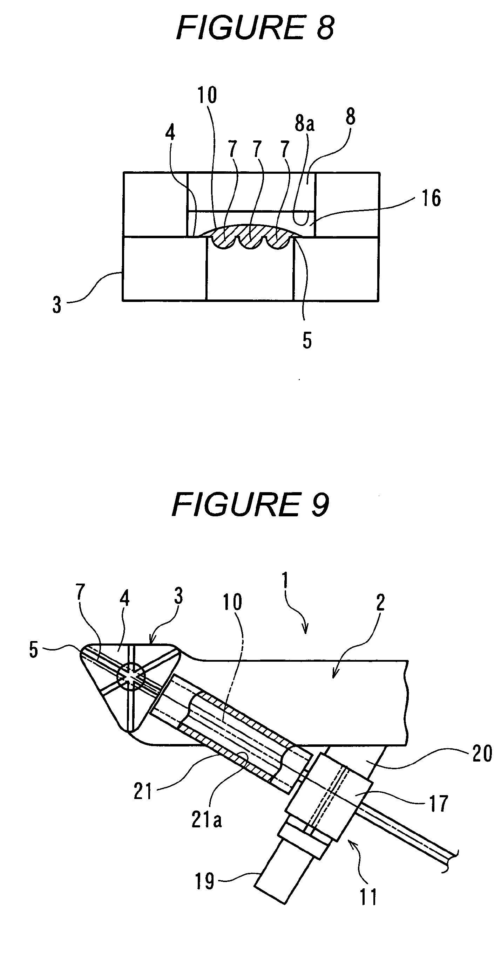

If the plurality of guide grooves 7 are formed in juxtaposition in the rake face 4 as shown in Figure 8, the guide path 16, formed by the cover 8, has a sectional shape that allows the chip 10 to pass through smoothly regardless of through which of the guide grooves 7 the chip 10 is guided.

As shown in Figure 7, the tensile force applying means 11 is composed of a pair of rollers 17, 18 that can rotate while sandwiching the chip 10 between the rollers 17, 18, and a servo motor 19 that rotates one or both of the rollers 17, 18. In the present example, the roller 18, located below in Figure 7, is coupled directly to the servo motor 19 for rotation. The rollers 17, 18 are rotatably supported on a support frame 20 via a bearing (not shown in the drawings). The servo motor 19 is attached to the support frame 20. The tensile force applying means 11 is attached to the shank 2 of the cutting tool 1 via the support frame 20. An axial direction of the rollers 17, 18 is orthogonal to an extending direction of the guide groove 7.

The tensile force applying means 11 may be attached to, instead of the cutting tool 1, the tool rest 15 (Figure 1), a tool holder mounted on the tool rest 15 to hold the cutting tool 1, or the like.

As shown in Figure 9, a guide path forming member 21 making up a guide path 21a through which the chip 10 passes may be provided between the guide groove 7 and both rollers 17, 18 of the tensile force applying means 11. The guide path 21a is formed so as to guide the chip 10 to between the pair of rollers 17, 18.

In the present example, the guide path forming member 21 is composed of a pipe and fixed to the shank 2. When the guide path forming member 21 is provided, the cover 8 in Figure 5 may be omitted. Alternatively, both the cover 8 and the guide path forming member 21 may be provided.

The guide path forming member 21 may be provided on the support frame 20 of the tensile force applying means 11 so as to serve as a component of the tensile force applying means 11. Furthermore, in the example shown in Figure 9, the guide path forming member 21 extends from the vicinity of the guide groove 7. However, the guide path forming member 21 may be provided only in the vicinity of the rollers 17, 18 so as to serve as an inlet guide. That is, the guide path forming member 21 may comprises a chip inlet of the tensile force applying means 11. If the guide path forming member 21 is not provided as the inlet guide, the chip inlet of the tensile force applying means 11 corresponds to a portion of the pair of rollers 17, 18 the width of which is appropriate to sandwich the chip 10 between the rollers 17, 18.

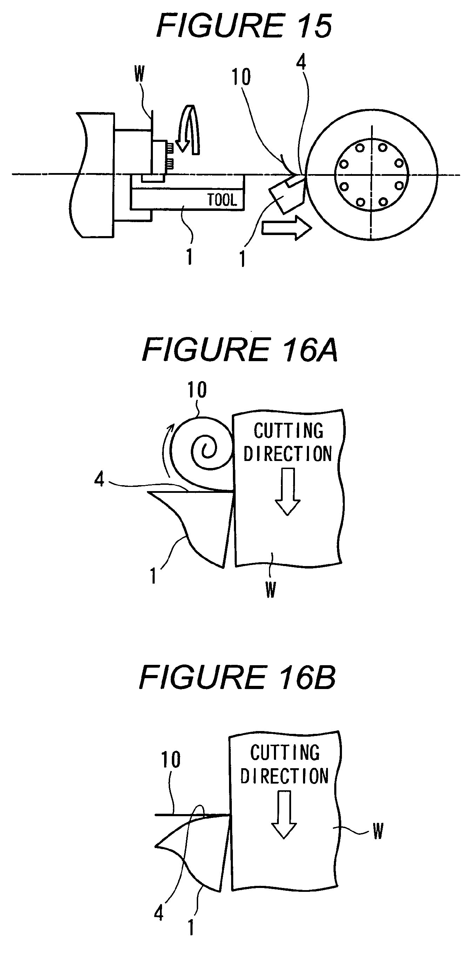

In Figure 1, the sectional shape of the rake face 4 of the cutting tool 1 is a projecting curved surface such that a cross section of the rake face 4 which is perpendicular to the cutting edge line 5 is a projecting curve, as shown in Figure 16B. The rake face 4 may be a plane.

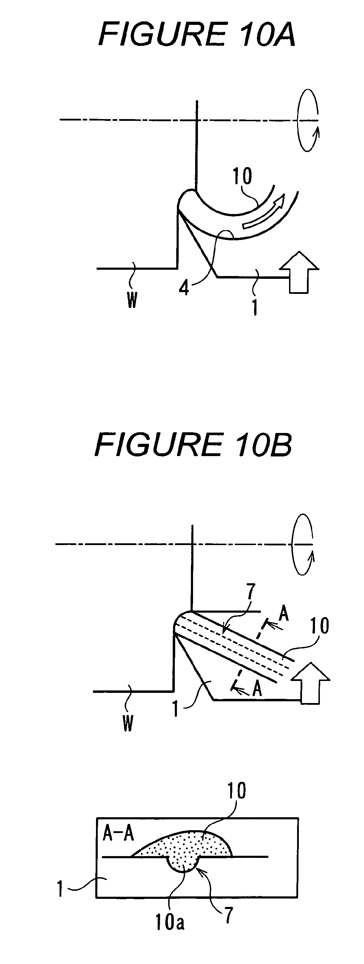

The cutting tool 1 configured as described above includes the guide groove 7, having the smaller width than the chip 10. Thus, as shown in Figure 10, where during cutting, the workpiece is pressed against the rake face 4 to form the chip 10, a plastically deformed portion 10a to be fitted into the guide groove 7 is formed on a part of the rake face 4 side of the chip 10 as a protrusion. The plastically deformed portion 10a making up the protrusion is fitted into the guide groove 7 and guided. Thus, a flow direction and a sideward curl of the chip 10 are corrected. The plastically deformed portion 10a created in the part of the rake face 4 side of the chip 10 is fitted into the guide groove 7. Thus, the chip 10 can be smoothly guided even with variation in the width of the chip 10.

With the conventional guide path such as a hole or a cover though which the chip is passed, a tip portion of the chip enters the path with the flow direction of the chip unregulated. Thus, the chip may be displaced from the inlet of the guide path and fail to be guided or come into angled contact with an inner wall surface of the guide path; in the latter case, the chip is likely to be jammed in the guide path. A change in cutting conditions generally changes the flow direction. This prevents the chip from being guided in a target direction, resulting in the displacement from the inlet or the angled contact. Furthermore, the chip may be curled in the guide path to come into abutting contact with the inner wall surface of the guide path. In this case, the chip is also jammed in the guide path.

In contrast, the guide groove 7 guides the chip fitting the guide shape portion. Instead of simply guiding the chip, the guide shape portion corrects the flow direction and curl of the chip, thus smoothly guiding the chip while preventing the chip from being jammed. The formation of the plastically deformed portion 10a of the chip 10 by the guide groove 7 is a part of the plastic deformation required to form the chip, and does not prevent the flow of the chip.

For the smooth guiding, the appropriate relationship between the width of the chip 10 and the width of the guide groove 7 is limited. The allowable width of the chip 10 at which the chip 10 can be smoothly guided with respect to the width of the guide shape portion is larger than that for the guide path through which the chip is passed. An example of the appropriate groove width is shown below as a test example.

The sideward curl of the chip 10 is thus corrected to allow the chip 10 to be guided in the desired direction. Thus, consecutive chip processing can be carried out even on ductile materials such as press steel and heat resistant alloys on which the chip breaker fails to act. Furthermore, a method of performing processing with the chip tensed by the tensile force applying means 11 can be implemented.

When a plurality of the guide grooves 7 are formed in juxtaposition in the rake face 4 as shown in Figures 3B and 4B, even with a change in cutting conditions, any of the guide grooves 7 corresponds to an appropriate position for the chip 10 to allow the chip 10 to be guided. The guide groove 7 thus allows the chip to be reliably guided. That is, from which position on the cutting edge line 5 the chip 10 extends may vary depending on the cutting conditions. Thus, the single guide groove 7 may fail to guide the chip 10. However, where the plurality of guide grooves 7 are formed, any of the guide grooves 7 corresponds to the appropriate position for the chip 10 to allow the chip 10 to be effectively guided.

When the cover 8 is provided, the chip 10 can be more reliably guided. When a cutting operation covers a wide range, for example, where surfaces of the workpiece W located in the respective directions are consecutively processed, for example, an angular relationship between the cutting tool 1 and the workpiece surface may vary, preventing the chip 10 from being reliably guided simply by the guide groove 7. In this case, the cover 8 allows the chip 10 to be more reliably guided. Combination of the correction by the guide groove 7 with regulation by the cover 8 prevents the curled chip from being jammed in the guide path 16 compared to the simple use of the cover 8.

When the guide path forming member 21 in Figure 9 is provided, the chip can be more reliably guided. The guide groove 7 guides the chip along the rake face 4 and thus fails to guide the chip to a position away from the cutting edge line 5. However, the guide path forming member 21 allows the chip 10 to be reliably guided to a desired position away from the cutting edge line 5.

When the rake face 4 is a projecting curved surface as shown in Figure 16B, the chip 10 conforms to the projecting curved surface of the rake face 4 to inhibit the upward curl. In conventional tools, the rake face is formed as a recessed curved surface so as to positively curl the chip upward. In contrast, the present embodiment uses the projecting curved surface to eliminate the upward curl. The cutting tool with the projecting curved surface is applicable to turning operations in general, unlike those which use edge lines. Additionally, the upward curl relatively insignificantly affects the guidance of the chip 10 to the desired position. Thus, the rake face has only to be the projecting curved surface where specially required.

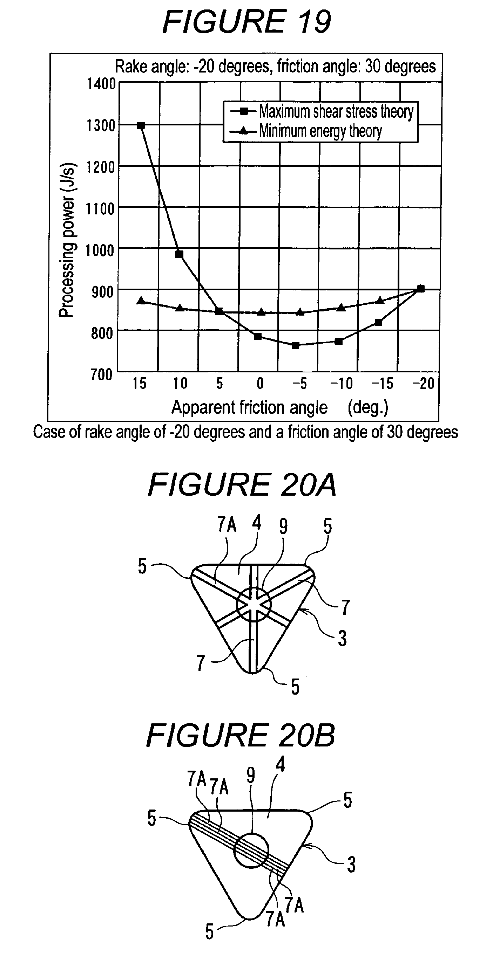

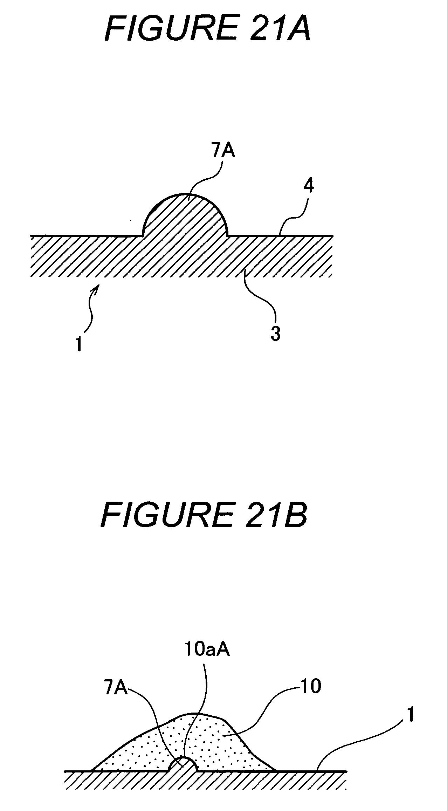

In the above-described embodiment, the guide shape portion provided on the rake face 4 of the cutting tool 1 is the guide groove 7. However, for example, as shown in Figures 20 and 21, the guide protrusion 7A may be provided as the guide shape portion. Figures 20A and 20B show examples in which the guide protrusion 7A is provided in the tip 3 shown in Figures 3A and 3B, in place of the guide groove 7. Figure 20A shows the example in which one guide protrusion 7A is provided for each of the cutting edge lines 5 at the respective corners. Figure 20B shows the example in which a plurality of the guide protrusions 7A are arranged parallel to one another for one of the cutting edge lines 5 at the respective corners. In either case, like the guide groove 7, the guide protrusion 7A extends from the cutting edge line 5 or the vicinity thereof to the opposite side. The guide protrusion 7 becomes gradually higher from the vicinity of the cutting edge line 5 and then continues at a constant height. The guide protrusion 7A need not necessarily extend to the opposite side but may be shaped to become gradually lower toward the opposite side so as to reach the rake face 4. The transverse sectional shape of the guide protrusion 7A is a semicircle, for example, as shown in Figure 21A. Furthermore, the guide protrusion 7A is formed to have a smaller width than the chip 10. The tip 3A with the guide protrusion 7A is attached to the shank 3 in Figure 2 to comprise a cutting tool with a chip guiding function. The tip 3A with the guide protrusion 7A can be used in place of the tip 3A with the guide groove 7 in the cutting tool 1 in the examples shown in the above-described figures.

If the cutting tool with guide protrusion 7A is used to perform cutting as shown in Figure 21B, where the workpiece is pressed against the rake face 4 to form the chip 10, a groove-shaped plastically deformed portion 10aA is formed on a surface of the chip 10 which contacts with the rake face 4. The guide protrusion 7A is fitted into the groove-shaped plastically deformed portion 10a to guide the chip. Thus, as is the case with the guide groove 7, the flow direction and curl of the chip 10 are corrected. The chip 10 can thus be smoothly guided in the desired direction.

Now, examples of tests for checking the effects of the guide groove 7 will be described. The tests were carried out on the cutting tool 1 including the tip 3 shown in Figure 3A, with the groove width and sectional shape of the guide groove 7 varied. The cover 8 in Figure 1 was not provided.

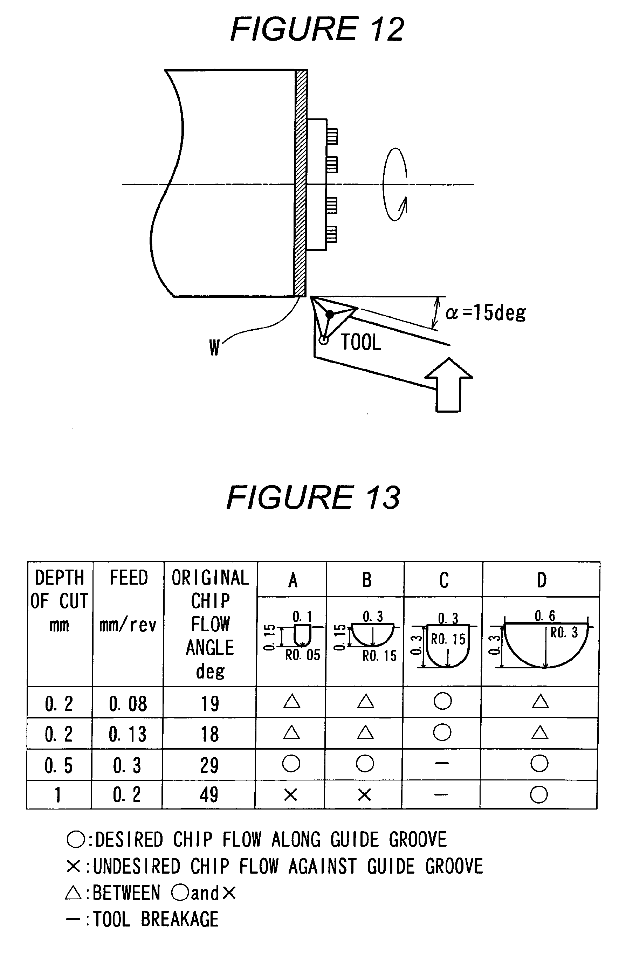

The cutting tool 1 of a nose radius of 0.8 mm and a tip angle of 60 degrees was used. With the width and thickness of the formed chip 10 taken into account, four types of guide grooves 7 shown in Figure 11 were each formed at a central position of the nose by wire-cut electric discharge machining. Processing experiments were carried out under cutting conditions including a cutting speed of 200 m/min for each of the four types shown in Figure 13 and an approach angle of 15 degrees as shown in Figure 12.

An original chip flow angle (see Figure 10A) shown in Figure 13 is an estimated value calculated based on the Colwell's empirical rule. In the present experiments, a target value to which the chip flow angle is controlled by the guide groove 7 is 45 degrees (see Figure 12) in all cases. Thus, for example, under conditions including a depth of cut of 0.2 mm and a feed of 0.08 mm/rev, the original flow angle is estimated to be forcibly changed from 19 degrees to about 26 degrees.

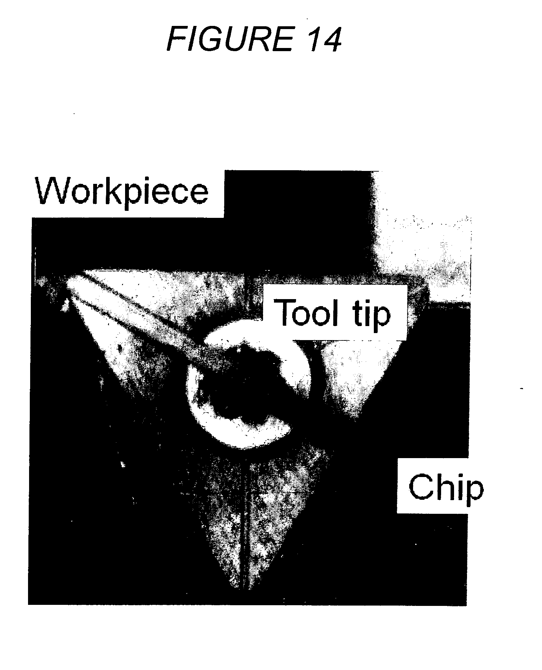

Figure 13 shows the results of the experiments. First, grooves A and B with smaller cross sections will be considered. In the two cases with a depth of cut of 0.2 mm, the sideward curl was inhibited unlike in the case of ordinary flat tools, and the chip flow direction was generally controlled to the direction of the guide groove 7. However, this condition prevented a perfectly straight chip from being discharged along the guide groove 7. This is expected to be because the position of the cutting edge line 5 involved in the cutting and the position of the guide groove 7 were slightly misaligned. The misalignment is expected to be avoided by for example, aligning the position of the guide groove 7 with a cutting position or providing a plurality of the guide grooves 7. At a depth of cut of 0.5 mm and a feed of 0.3 mm/rev, the cutting position and the groove portion aligned with each other. The chip was guided along the guide groove 7 to flow straight as shown by a photograph in Figure 14. On the other hand, at a depth of cut of 1 mm and a feed of 0.2 mm/rev, the chip was curled sideward and failed to flow along the guide groove 7. This is expected to be due to a weak force acting to correct the flow of the chip because of the small cross section of the groove. For a groove C, in the two cases with a depth of cut of 0.2 mm, the chip 10 flowed straight along the guide groove 7. On the other hand, in the two other cases with larger depths of cut, the strength was insufficient, resulting in damage to the tip portion of the tool. For a groove D, in the two cases with a depth of cut of 0.2 mm, the chip 10 flowed imperfectly. This is expected to be because the groove width was excessively large for the chip 10. On the other hand, in the two other cases with the larger depths of cut, the chip 10 flowed straight along the guide groove 7.

The chip 10 flowing straight along the guide groove 7 was determined to have a projecting shape on the rake face 4 side thereof which is opposite to the groove shape. Thus, the intended mechanism was determined to be able to control the flow direction and sideward curl of the chip 10 at least under the appropriate range of conditions.

The results of tests on inhibition of the upward curl will be described. As shown in Figure 16B, a cutting tool was produced in which the rake face 4 had a curvature opposite to that of the upward curl. The cutting tool 7 did not include the guide groove 7. Approximate two-dimensional cutting was performed as shown in Figure 15. Changes in upward curl depending on the radius of curvature were measured. Tools were produced in which the rake face had a radius of 0 (ordinary tool), 0.035, 0.065, or 0.17 mm⁻¹, respectively. Five processing experiments were carried out for each of the tools at a width of cut of 1 mm, a depth of cut of 0.1 mm, and a cutting speed of 200 m/min. The rake angle at a tip portion of the cutting edge line was adjusted to 0 degree.

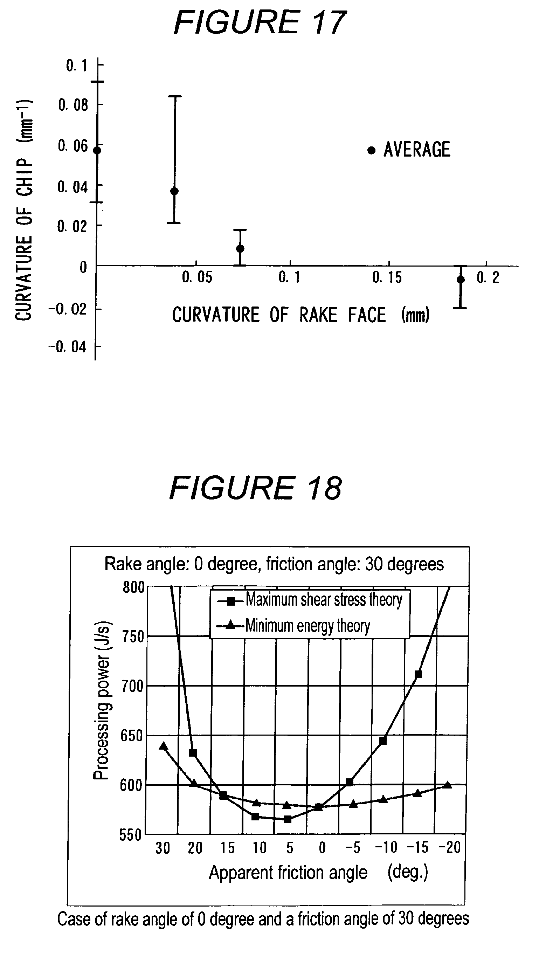

Figure 17 shows the measurement results of the curvature of the upward curl of the chip 10 formed by each of the tools. Figure 17 indicates that the curvature of the upward curl decreased consistently with the curvature of the rake face and that no upward curl occurred where the rake face had a curvature of 0.1 mm⁻¹ (the rake face had a radius of 10 mm). Figure 17 also indicates that where the rake face had a larger curvature, the chip was curled in the opposite direction.

As described above, the test results indicate that the upward curl can be inhibited by providing the rake face of the cutting tool with a projecting curvature.

The effects of the tensile force applying means 11 will be described. When the tensile force applying means 10 is provided such that cutting is performed with the chip 10 tensed by the tensile force applying means 10, the cutting resistance, required power, resulting heat, and the like can be reduced to improve the machinability in general. At the same time, the cutting efficiency can be improved, and the tool life can be prolonged. Furthermore, the machining accuracy is improved. The prolonged tool life resulting from the reduced cutting resistance conversely means that with the tool life remaining unchanged, faster or heavier cutting can be achieved. The present embodiment thus increases efficiency compared to the conventional art. When provided on the shank 2 of the cutting tool 1, the tensile force applying means 11 can be easily located closer to the cutting edge line 5. Thus, the flowing chip 10 can be easily guided to the tensile force applying means 11. In particular, the tip portion of the chip 10 can be easily caught by the tensile force applying means.

The tensile force applying means 11 is composed of the pair of rollers 17, 18 sandwiching the chip 10 between the rollers 17, 18. Thus, the chip 10 can be tensed while being continuously fed. Furthermore, the use of the servo motor 19 enables speed and torque to be controlled, allowing the appropriate tension to be applied.

Simulation results of stretch cutting will be described. In stretch cutting of the chip, a relationship between an apparent decrease in friction angle resulting from stretching of the chip and processing power was analyzed utilizing a simple shear angle model. The results of the analysis are shown in Figures 18 and 19. Figure 18 shows a case in which the rake angle is 0 degrees. Figure 19 shows a case in which the rake angle is -20 degrees. In both cases, the friction angle is 30 degrees. In connection with the processing power, Figures 18 and 19 show results based on the "maximum shear stress theory", a concept often used for simple cutting simulation, and results based on the "minimum energy theory". The results based on both theories indicate that as shown in Figures 18 and 19, the processing power is minimized where the apparent friction angle is closed to 0 degree. In this case, the chip is pulled with a force canceling the frictional force exerted between the chip and the rake face of the cutting tool.

Consequently, by performing cutting while applying a tensile force to the chip so as to set the apparent friction angle to 0 degree, the processing power including the tensile force is minimized, thus reducing frictional heat. This in turn reduces degradation of the cutting tool and a decrease in machining accuracy.

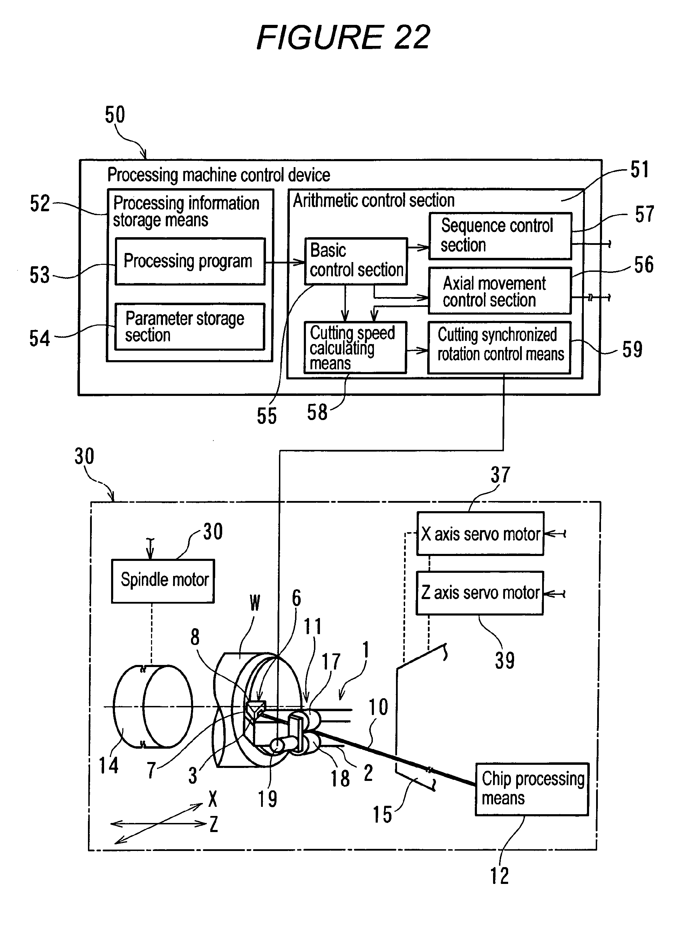

Figures 22 to 24 show an example of a machine tool with a function of controlling the tensile force applying means 11 so that the apparent friction angle is set to 0 degree.

In Figure 22, the machine tool is composed of a machine tool main body 30 and a processing machine control device 50. The term "machine tool main body 30" as used herein refers to a mechanical portion of the machine tool, that is, the whole machine tool except for a control system.

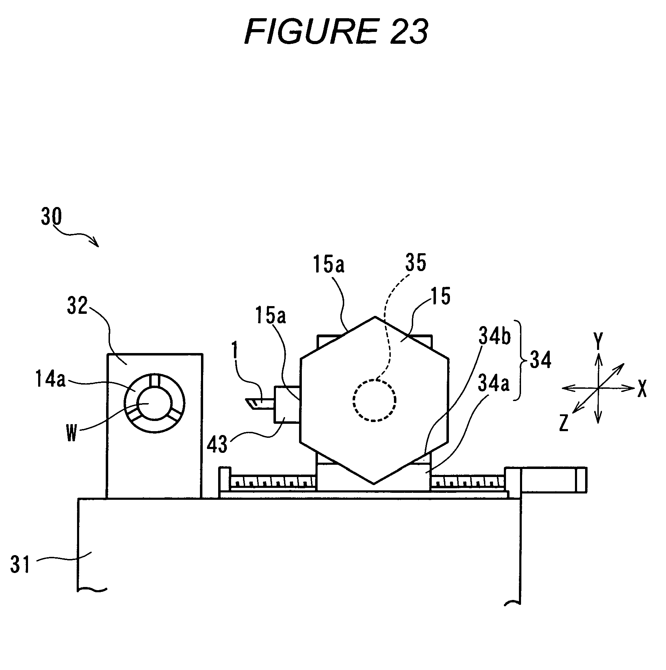

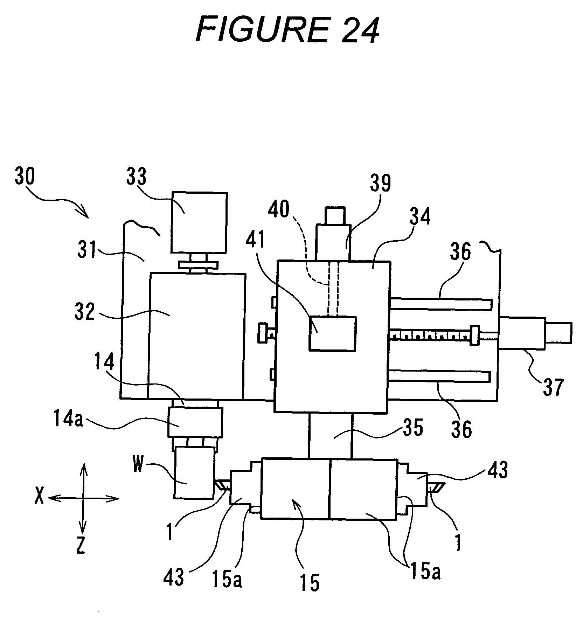

In Figures 23 and 24, the machine tool main body 30 is composed of a turret type lathe. A spindle 14 is supported on a bed 31 via a head stock 32. A spindle chuck 14a gripping the workpiece W is provided at a spindle head of the spindle 14. The spindle 14 is rotationally driven by a spindle motor 33 comprising a servo motor or the like.

The tool rest 15 is composed of a turret tool rest with a polygonal front shape. The cutting tool 1 is attached to one of outer peripheral surface portions 15a making up side portions of the polygon. The cutting tool 1 is the cutting tool 1 with the chip guiding function which has the guide groove 7 and the tensile force applying means 11 as shown in Figures 1 and 7. Tools attached to the outer peripheral surface portions 15a of the tool rest 15 may include cutting tools such as a turning tool and rotary tools (not shown in the drawings) such as a drill and a milling head. However, at least one of the tools is the cutting tool 1 with the chip guiding function.

The turret type tool rest 15 is indexably mounted on an upper feed bar portion 34b of a feed bar 34 via a turret shaft 35. The feed bar 34 is composed of a feed bar base 34a and the upper feed bar portion 34b. The feed bar base 34a is installed on the bed 31 via guides 36 so as to advance and retract freely in a horizontal direction (X axis direction) orthogonal to an axial direction (Z axis direction) of the spindle. The upper feed bar portion 34b is mounted on the feed bar base 34a so as to advance and retract freely in the axial direction (Z) of the spindle. The feed bar base 34a is drivingly advanced and retracted freely by an X axis servo motor 37 via a feed screw mechanism 38.

The upper feed bar portion 34b is drivingly advanced and retracted freely by a Z axis servo motor 39 via a feed screw mechanism 40. The feed bar base 34a and the upper feed bar portion 34b advance and retract to move the tool rest 15 in two orthogonal axial directions. Furthermore, an indexing motor 41 mounted on the upper feed bar portion 34b turns the tool rest 15 for indexation.

The machine tool main body 30 has the chip processing means 12 shown in Figure 1. In the illustrated example, the tool rest 15 is located parallel to the spindle 14. However, the tool rest 15 may be located orthogonally to or opposite the spindle 14. The tool rest 15 is not limited to the turret type but may be shaped like comb teeth or may support only one cutting tool 1. Furthermore, the machine tool with the chip processing function is applicable not only to the lathe but also to various machine tools using the cutting tool 1.

Figure 22 shows a conceptual configuration of the control system. The processing machine control device 50 is composed of a computerized numerical control device and a programmable controller. The processing machine control device 50 has an arithmetic control section 51 composed of a CPU (Central Processing Unit), a memory, and the like and a processing information storage means 52. The control section 51 executes a processing program 53 to control components of the machine tool main body 30. The processing information storage means 52 has a storage section for the machining program 53 and a parameter storage section 54. The parameter storage section 54 stores information on various control operations as parameters. The processing program 53 contains axial movement commands for the axial (X axis, Z axis) directions of the tool rest 15, an axial movement command corresponding to a rotation command for the spindle 14, and the like. Non-execution command description portion of the processing program 53 contains information on the tool such as the shape of the cutting tool 1 (the nose radius, approach angle, and rake angle, and the angle of a guide groove, if any), and information on the workpiece such as the material and type of the workpiece W.

The arithmetic control section 51 has a basic control section 55, an axial movement control section 56, and a sequence control section 57. The basic control section 55 reads the commands from the processing program 53 in the order in which the commands are stored. The basic control section 55 then allows the axial movement control section 56 to execute the axial movement commands. The basic control section 54 transfers the sequence commands from the processing program 53 to the sequence control section 57. The sequence control section 57 controls sequence operations of the machine tool main body 30, for example, rotational indexation of the turret tool rest 15 and opening and closing of a machine body cover (not shown in the drawings), in accordance with a built-in sequence program (not shown in the drawings).

The axial movement control section 56 is means for controlling axial movement of the X axis servo motor 37, the Z axis servo motor 39, the spindle motor 33, and the like in the machine tool main body 30. The axial movement control section 56 has a servo control means (not shown in the drawings) to perform closed loop control on the axial servo motors 37, 39, 33 in accordance with instruction values in the axial movement commands transmitted from the processing program 53 via the basic control section 55. Information from position detectors (not shown in the drawings) such as pulse coders or encoders which are provided on the axial servo motors 37, 39, 33 is used for the closed loop control.

The processing machine control device 50 basically configured as described above includes a cutting speed calculating means 58 and a cutting synchronized rotation control means 59 which will be described below. The cutting speed calculating means 58 calculates the current cutting speed from the beginning to end of cutting. The cutting speed calculating means 58 calculates the cutting speed based on, for example, various pieces of information such as the processing program 53 which are stored in the processing information storage means 52, and the current position information recognized by the axial movement control section 56. The cutting speed is the peripheral speed of a portion of the workpiece W which is contacted by the cutting tool 1 and thus varies as the workpiece diameter decreases in association with the progress of the cutting. However, the current peripheral speed and thus the cutting speed can be calculated based on the current axial values and the rotation number of the spindle from the axes of the axial movement control section 56, which performs the closed loop control, or the instruction values for the current axial values and the spindle rotation number obtained from the processing program 53, and data on tool dimensions stored in the processing information storage means 52. For example, provided that tool length data L is stored in the processing information storage means 52 and the X axis position (x) and the spindle rotation number (n) are obtained from the axial movement control section 56, the cutting speed calculating means 58 calculates the position of the cutting edge from the X axis position (x) and the tool length data L. The cutting speed calculating section 58 further calculates the turning radius of the cutting edge position and then determines the peripheral speed based on the turning radius and the spindle rotation number (n).

The cutting synchronized rotation control means 59 controls the rotation speed of the servo motor 19 for rotationally driving the rollers 17, 18 so that the speed at which the chip 10 is pulled by rotation of the rollers 17, 18 of the tensile force applying means 11 (that is, the peripheral speed of the driving side of the rollers 17, 18) equals the cutting speed at which the rotating workpiece W is cut by the cutting tool 1. The servo motor 19 includes the speed detector (not shown in the drawings). The cutting synchronized rotation control means 59 performs the closed loop control.

The term "synchronized rotation control" as used herein is not limited to strict synchronized control but means control such that the speed at which the chip 10 approximately equals the cutting speed. The cutting synchronized rotation control means 59 may perform such control as makes the chip 10 pulling speed approximately equal to the cutting speed. The speed detector for the servo motor 19 may be, for example, a tacho-generator. Furthermore, the servo motor 19 generally has an incremental pulse coder. Thus, the servo motor 19 may obtain speed information from the position detector such as the pulse coder or encoder.

As described above, the cutting speed calculating means 58 and the cutting synchronized rotation control means 59 are provided to perform control such that the speed at which the chip 10 is pulled by the rollers 17, 18 of the tensile force applying means 11 equals the cutting speed. Thus, the cutting can be achieved with a tensile force applied so as to set the apparent friction angle to approximately zero degree. This approximately minimizes the processing power including the tensile force, thus reducing frictional heat. This in turn reduces degradation of the cutting tool and a decrease in machining accuracy. Furthermore, the peripheral speed is calculated based on the information from the processing program 53 and the like or the current position information and the like from the axial movement control section 56. Thus, the synchronized control of the tension speed and cutting speed can be performed without the need to add a dedicated sensor. The present embodiment thus requires only a simple configuration.

If the tensile force applying means 11 is composed of the rollers 17, 18 and the servo motor 19, whether or not the chip 10 has been caught up between the rollers 17, 18 can be determined based on a current feedback value from the servo motor 19 (where the chip starts to be pulled, a load is imposed to maintain speed synchronization, thus increasing motor torque, that is, current), Thus, a means for determining whether or not the chip 10 has been caught up between the rollers 17, 18 (not shown in the drawings) may be provided. Furthermore, the means (not shown in the drawings) may be provided for issuing an alarm if the chip 10 is determined not to have been caught up between the rollers 17, 18 within a set time after the start of the cutting.

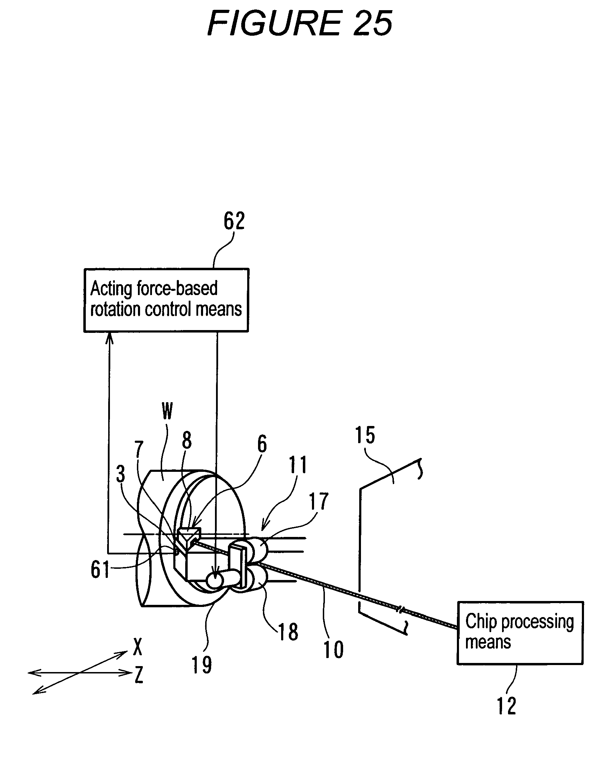

Figure 25 shows another example of a machine tool with a function of controlling the tensile force applying means 11 so that the apparent friction angle is set to 0 degree. In this example, the machine tool includes a force sensor 61 located , for example, in the vicinity of the cutting edge line 5 of the cutting tool 1, to detect a force acting on the cutting tool 1. The machine tool also includes an acting force-based rotation control means 62 for controlling, depending on a value detected by the force sensor 61, the force (motor torque) generated by rotation of the rollers 17, 18 of the tensile force applying means 11 to pull the chip 10. The force sensor 61 detects, for example, the radial force of the cutting force and is installed by being imbedded in the shank 2 (between the cutting tool 1 and the tensile force applying means 11). The acting force-based rotation control means 62 gives a torque instruction to the servo motor so as to cancel an output from the force sensor 61. The correspondence between the output from the force sensor 61 and the torque instruction value provided to the servo motor can be pre-calibrated. The force detected by the sensor 61 is generated by, for example, the friction between the chip 10 and the rake face 4. Thus, offsetting this force allows the chip 10 to be controllably pulled so as to set the apparent friction angle to 0 degree.

In this example, the force sensor 61 is located to detect only the cutting force applied to the cutting tool 1. However, the sensor may be placed between the tool rest or the like and the tool shank, supporting both the cutting tool 1 and the tensile force applying means 11, in order to detect forces applied to both the cutting tool 1 and the tensile force applying means 11. In this case, the portion supported by the force sensor is large in mass, resulting in reduced detection responsiveness. However, the sensor can instead detect the resultant force applied to both the cutting tool 1 and the tensile force applying means 11. Thus, by increasing or reducing the torque instruction value provided to the servo motor so as to set the detected value of the resultant force to zero, the apparent friction angle can be accurately set to zero.

The present embodiment requires the force sensor 61 but is applicable to a case in which the current cutting speed cannot be calculated from the information stored in the processing machine control device.

Figure 24 shows a machine tool with a chip processing function according to yet another embodiment of the present invention. In the present embodiment, the chip guiding means 6 is controllably guided by a chip flow direction control means 63. In the present embodiment, the chip flow direction control means 63 is used in combination with the guide groove 7. Furthermore, the cover 8 in Figure 1 may be or may not be provided. The guide path forming member 21 in Figure 9 may be provided. An inlet guide (not shown in the drawings) may be provided on the tensile force applying means 11.

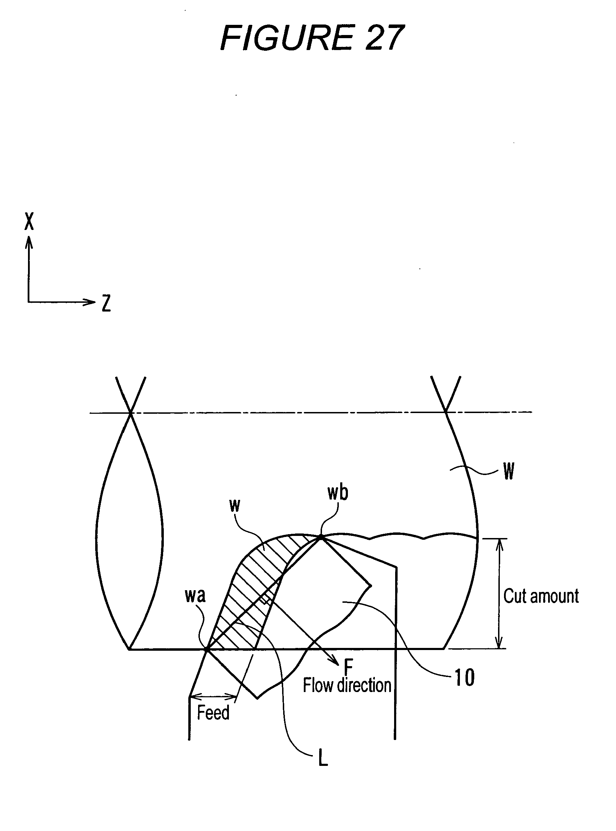

First, the principle of chip flow direction control will be described with reference to Figure 27. When the workpiece W is cut in the X axis direction and fed in the Z axis direction to form a cut cross section w (a shaded area in Figure 27), the chip 10 flows in a direction F substantially orthogonal to a straight line L connecting points wa, wb together which are located at opposite ends of the cut cross section w (this rule is known as the Colwell empirical rule). Thus, given a tool shape, the chip 10 can be allowed to flow in a desired direction by regulating a relationship between the cut amount and the feed amount.

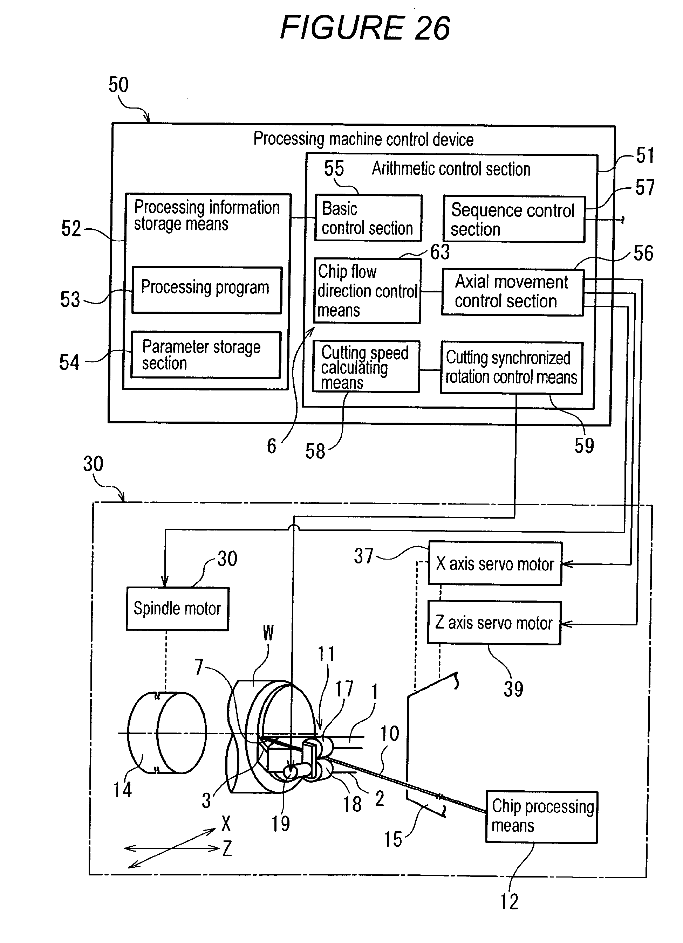

Based on the above-described rule, the chip flow direction control means 6 in Figure 26 determines the relationship between the cut amount and the feed amount such that the tip portion of the chip 10 is directed to within the range within which the chip 10 can receive a chip tip portion of the tensile force applying means 11. The chip flow direction control means 6 regulates the relationship between the cut amount and the feed amount output by the axial movement control section 56 according to a set relationship. The set relationship specifies that the flow direction of the chip, determined by the cut amount, the feed amount, and the tool shape, is such that the chip is directed to within the range within which the chip can receive the chip tip portion of the tensile force applying means.

The relationship between the cut amount and the feed amount is generally determined by an instruction from the processing program 53. The instruction from the processing program 53 varies the relationship between the cut amount and the feed amount. The period of the control by the chip flow direction control means 63 may be limited to an initial cutting period from the start of the cutting until the chip 10 is caught by the tensile force applying means 11. Thereafter, the relationship between the cut amount and the feed amount may be changed. Alternatively, the chip flow direction control means 63 may perform the control throughout the period of a single cutting process.

If the period of the control by the chip flow direction control means 63 is limited to the initial cutting period, for example, where an NC program is pre-generated by CAM, the amount of time until the chip is caught may be predicted such that where that time elapses, the regulation is canceled and the cut amount and the feed amount are changed. Alternatively, a timer may be used to set the period during which the chip flow direction control means 63 performs the control. Alternatively, the control may be canceled where the tensile force applying means 11 is determined to successfully grip the chip 10. When the tensile force applying means 11 is composed of the rollers 17, 18 and the servo motor 19, whether or not the chip 10 is caught up between the rollers 17, 18 can be determined based on an output from the detector (or the force sensor 61) for the servo motor 19. The control may be canceled after the determination.

In this configuration, the flow direction of the chip 10 is controllably regulated, thus allowing the cutting tool 1 to be simply configured. The remaining part of the configuration of the present embodiment is similar to that of the machine tool with the chip processing function described with reference to Figure 20. Also in the present embodiment, the processing machine control device 50 include the above-described cutting speed calculating means 58 and a cutting synchronized rotation control means 59 to control the pulling speed of the tensile force applying means 11 in synchronism with the cutting speed.

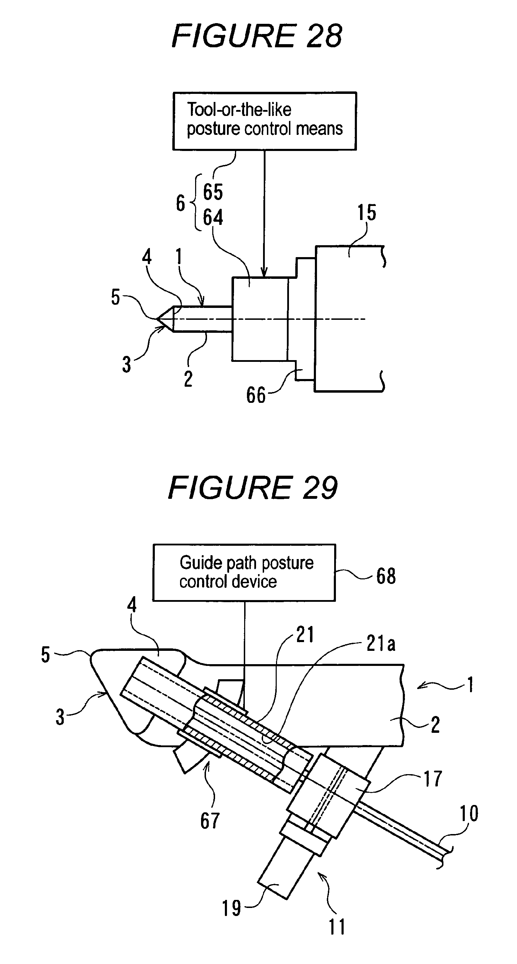

Figure 28 shows still another embodiment of the present invention. A machine tool with a chip processing function according to the present embodiment includes, as the chip guiding means 6, a tool posture changing mechanism 64 that changes the posture of the cutting tool 1 with respect to the workpiece W, and a tool posture control means 65 for allowing the tool posture changing mechanism 64 to perform a posture changing operation according to a set rule. The tool posture changing mechanism 64 is provided on the tool rest 15 or a tool holder 66 provided on the tool rest 15. The tool posture changing mechanism 64 rotates the cutting tool 1 and the like around, for example, an axis of the shank 2. Alternatively, the tool posture changing mechanism 64 rotates the cutting tool 1 or the like around, for example, an axis passing through the center of the tool nose portion and parallel to the cutting direction.

The tool posture control means 65 is provided, for example, in the processing machine control device 50 described above with reference to Figure 22. The set rule for the tool posture control means 65 specifies a relationship between the posture of the cutting tool 1 or the like and the processing conditions such as the cut amount, the feed amount, and the tool shape. According to the processing conditions obtained from the stored contents and the like of processing information storage means 52 (Figure 22), the tool posture control means 65 determines the posture of the cutting tool 1 so that the chip 10 is directed toward the tensile force applying means 11. The set rule may be appropriately prepared based on simulation, test processing, or the like.

The tool posture changing mechanism 64 is provided in the cutting tool 1 in combination with the cutting tool 1.

The flow direction of the chip 10 varies depending on the cutting conditions such as the cut amount, the feed amount, and the tool shape. Thus, by changing the posture of the tool or the like depending on the cutting conditions, the tip portion of the chip 10 can be guided to the tensile force applying means 11, which can then catch the tip portion.

The period of the posture control of the tool or the like by the tool posture control means 54 may be limited to the initial cutting period from the start of the cutting until the chip 10 is caught by the tensile force applying means 11. Alternatively, the tool posture control means 54 may perform the posture control throughout the period of a single cutting process.

The remaining part of the configuration of the present embodiment is similar to that of the machine tool with the chip processing function shown in Figure 22.

Figure 29 shows further another embodiment of the present invention. The machine tool with the chip processing function includes, as the chip guiding means 6, a guide path forming member 21 provided between the cutting edge line 5 and both the rollers 17, 18 of the tensile force applying means 11 and internally forming the guide path 21a through which the chip 10 passes. The machine tool also include a guide path posture changing mechanism 67 that changes the posture of the guide path member 21 with respect to the workpiece W and a guide path posture control means 68 for allowing the guide path posture changing mechanism 67 to perform a posture changing operation according to a set rule. The angle of the guide path posture change mechanism 67 can be varied in the plane of the rake face using the center of the node portion of the cutting edge 5 as a pivotal center. The cover 8 in Figure 5 may be provided, and the guide path forming member 21, the posture of which is changed by the guide path posture changing mechanism 67, may be provided between the cover 8 and the rollers 17, 18.

The guide path posture control means 68 is provided, for example, in the processing machine control device 50 described above with reference to Figure 22. The set rule for the guide path posture control means 68 specifies a relationship between the direction of the guide path forming member 21 and the processing conditions such as the cut amount, the feed amount, and the tool shape. According to the processing conditions obtained from the stored contents and the like of a processing information storage means 52 (Figure 22), the guide path posture control means 68 determines the direction of the guide path forming member 21. The set rule may be appropriately prepared based on simulation, test processing, or the like.

By thus changing the direction of the guide path forming member 21 depending on the cutting conditions or the like, the tip portion of the chip 10 can be reliably guided to the tensile force applying means 11. Furthermore, the chip 10 can be smoothly guided without being jammed in the guide path forming member 21.

In the above-described embodiments, the present invention is applied to the cutting tool used for turning. However, the cutting tool with the chip processing function according to the present invention is applicable to a cutting tool such as a planer which cuts a translating workpiece.

While the present invention has been described with respect to preferred embodiments thereof, it will be apparent to those skilled in the art that the disclosed invention may be modified in numerous ways and may assume many embodiments other than those specifically set out and described above, within the scope of the claims.

## Claims

1. A machine tool with a cutting tool and a chip processing function which brings a cutting tool (1) into abutting contact with a workpiece (W) for cutting, the machine tool comprising:
a tensile force applying means (11) provided on or in a vicinity of the cutting tool (1) through which a chip (10) continuing from the workpiece (W) and flowing from a cutting edge line (5) of the cutting tool (1) is passed, while applying a tensile force to the chip (10), and a chip guiding means for guiding the chip (10) to the tensile force applying means (11), w
herein the cutting tool (1) comprises a rake face (4) that is planar or a projecting curved surface, such that a cross section of the rake face (4) which is perpendicular to the cutting edge line (5) is a projecting curve,
wherein the chip guiding means includes a guide shape portion (7; 7a) provided on the rake face (4) and extending linearly away from the cutting edge line (5) located at an edge of the rake face (4) or a vicinity of the cutting edge line (5) with respect to the cutting edge line (5) to guide the chip (10), and
wherein the guide shape portion (7; 7a) is recessed or projected with respect to the rake face (4), so that during a chip formation process a part (10a) of the chip (10) which flows onto the rake face (4) is plastically deformed so as to fit to the guide shape portion (7; 7a) and to be guided by the plastically deformed portion (10a).

2. The machine tool with a chip processing function according to Claim 1, **characterized in that** the chip guiding means further includes a cover (6) covering the rake face (4) of the cutting tool (1) to form a guide path between the rake face (4) and the cover (6) through which the chip (10) passes.

3. The machine tool with a chip processing function according to Claim 1, **characterized in that** the rake face (4) of the cutting tool (1) is formed as a projecting curved surface.

4. The machine tool with a chip processing function according to Claim 1, **characterized in that** the chip guiding means further includes a tool posture changing mechanism (64) changing a posture of the cutting tool (1) with respect to the workpiece (W), and a tool posture control means (65) for allowing the tool posture changing mechanism (64) to perform a posture changing operation according to a set rule.

5. The machine tool with a chip processing function according to Claim 1, further **characterized by** comprising:
a driving source (37) allowing the cutting tool (1) to perform cutting and feeding the cutting tool (1),
wherein the chip guiding means further includes a chip flow direction control means (63) for controlling the driving source (37) to regulate a relationship between a cut amount and a feed amount according to a set relationship, and
wherein the set relationship specifies that a flow direction of the chip (10) determined by the cut amount, the feed amount, and a tool shape is such that the chip (10) is directed to within a range within which the chip (10) can receive a chip tip portion of the tensile force applying means (11).

6. The machine tool with a chip processing function according to Claim 1, **characterized in that** the tensile force applying means (11) comprises a pair of rollers (17, 18) that can rotate with the chip (10) sandwiched between the rollers (17, 18) and a servo motor (19) rotating one of both of the rollers (17, 18).

7. The machine tool with a chip processing function according to Claim 6, **characterized by** including the cutting synchronized rotation control means for controlling a rotation speed of the servo motor (19) rotating the rollers (17, 18) so that a speed at which the chip (10) is pulled by rotation of the rollers (17, 18) equals a cutting speed at which the rotating workpiece (W) is cut by the cutting tool (1) based on relative motion between the cutting tool (1) and the workpiece (W).

8. The machine tool with a chip processing function according to Claim 6, **characterized by** including a force sensor measuring a cutting force acting between the cutting tool (1) and the workpiece (W), and an acting force-based rotation control means for controlling a rotation speed of the servo motor (19) rotating the rollers (17, 18) according to a detection output from the force sensor.

9. The machine tool with a chip processing function according to Claim 1, **characterized by** including a chip processing means (12) for severing or winding the chip (10) having passed through the tensile force applying means (11).

## Patentansprüche

1. Eine Werkzeugmaschine mit einem Schneidwerkzeug und einer Spanverarbeitungsfunktion, die zum Schneiden ein Schneidwerkzeug (1) in Stoßkontakt mit einem Werkstück (W) bringt, wobei die Werkzeugmaschine folgende Merkmale aufweist:
eine Zugkraftausübungseinrichtung (11), die an dem oder in einer Nähe des Schneidwerkzeugs (1) vorgesehen ist, durch die ein Span (10) hindurchgeleitet wird, der von dem Werkstück (W) weitergeht und von einer Schneidkantenlinie (5) des Schneidwerkzeugs (1) fließt, während eine Zugkraft auf den Span (10) ausgeübt wird, und
eine Spanführungseinrichtung zum Führen des Spans (10) zu der Zugkraftausübungseinrichtung (11),
wobei das Schneidwerkzeug (1) eine Spanfläche (4) aufweist, die planar oder eine hervorstehende gekrümmte Oberfläche ist, so dass ein Querschnitt der Spanfläche (4) senkrecht zu der Schneidkantenlinie (5) eine hervorstehende Krümmung ist,
wobei die Spanführungseinrichtung einen Führungsformabschnitt (7, 7a) aufweist, der an der Spanfläche (4) vorgesehen ist und sich linear von der Schneidkantenlinie (5) wegerstreckt, die an einem Rand der Spanfläche (4) oder in einer Nähe der Schneidkantenlinie (5) in Bezug auf die Schneidkantenlinie (5) angeordnet ist, um den Span (10) zu führen, und
wobei der Führungsformabschnitt (7, 7a) in Bezug auf die Spanfläche (4) zurückgesetzt ist oder hervorsteht, so dass während eines Spanbildungsprozesses ein Teil (10a) des Spans (10), der auf die Spanfläche (4) fließt, plastisch derart verformt wird, dass er in den Führungsformabschnitt (7, 7a) passt und von dem plastisch verformten Abschnitt (10a) geführt wird.

2. Die Werkzeugmaschine mit einer Spanverarbeitungsfunktion gemäß Anspruch 1, **dadurch gekennzeichnet, dass** die Spanführungseinrichtung außerdem eine Abdeckung (6) aufweist, die die Spanfläche (4) des Schneidwerkzeugs (1) abdeckt, um einen Führungsweg zwischen der Spanfläche (4) und der Abdeckung (6) zu bilden, durch den der Span (10) hindurchgeht.

3. Die Werkzeugmaschine mit einer Spanverarbeitungsfunktion gemäß Anspruch 1, **dadurch gekennzeichnet, dass** die Spanfläche (4) des Schneidwerkzeugs (1) als hervorstehende gekrümmte Oberfläche gebildet ist.

4. Die Werkzeugmaschine mit einer Spanverarbeitungsfunktion gemäß Anspruch 1, **dadurch gekennzeichnet, dass** die Spanführungseinrichtung außerdem einen Werkzeugstellungsänderungsmechanismus (64), der eine Stellung des Schneidwerkzeugs (1) in Bezug auf das Werkstück (W) ändert, und eine Werkzeugstellungssteuereinrichtung (65) aufweist, um es dem Werkzeugstellungsänderungsmechanismus (64) zu ermöglichen, einen Stellungsänderungsvorgang gemäß einer festgelegten Regel durchzuführen.

5. Die Werkzeugmaschine mit einer Spanverarbeitungsfunktion gemäß Anspruch 1, die weiterhin **dadurch gekennzeichnet ist, dass** sie folgende Merkmale aufweist:
eine Antriebsquelle (37), die dem Schneidwerkzeug (1) das Durchführen von Schneiden ermöglicht und die dem Schneidwerkzeug (1) zuführt,
wobei die Spanführungseinrichtung weiterhin eine Spanflussrichtungssteuereinrichtung (63) zum Steuern der Antriebsquelle (37) aufweist, um eine Beziehung zwischen einer Schneidemenge und einer Zuführmenge gemäß einer festgelegten Beziehung zu regeln, und
wobei die festgelegte Beziehung angibt, dass eine Flussrichtung des Spans (10), die von der Schneidmenge, der Zuführmenge und einer Werkzeugform bestimmt ist, derartig ist, dass der Span (10) in einen Bereich, innerhalb dessen der Span (10) einen Spanspitzenabschnitt der Zugkraftausübungseinrichtung (11) aufnehmen kann, geleitet wird.

6. Die Werkzeugmaschine mit einer Spanverarbeitungsfunktion gemäß Anspruch 1, **dadurch gekennzeichnet, dass** die Zugkraftausübungseinrichtung (11) ein Paar Rollen (17, 18), die sich mit dem zwischen den Rollen (17, 18) angeordneten Span (10) drehen können, sowie einen Servomotor (19) aufweist, der eine der beiden Rollen (17, 18) dreht.

7. Die Werkzeugmaschine mit einer Spanverarbeitungsfunktion gemäß Anspruch 6, **dadurch gekennzeichnet, dass** sie die schneidsynchronisierte Drehsteuereinrichtung zum Steuern einer Drehgeschwindigkeit des Servomotors (19) aufweist, der die Rollen (17, 18) dreht, so dass eine Geschwindigkeit, bei der der Span (10) durch eine Drehung der Rollen (17, 18) gezogen wird, gleich einer Schnittgeschwindigkeit ist, mit der das sich drehende Werkstück (W) von dem Schneidwerkzeug (1) geschnitten wird, basierend auf einer relativen Bewegung zwischen dem Schneidwerkzeug (1) und dem Werkstück (W).

8. Die Werkzeugmaschine mit einer Spanverarbeitungsfunktion gemäß Anspruch 6, **dadurch gekennzeichnet, dass** sie einen Kraftsensor, der eine Schnittkraft misst, die zwischen dem Schneidwerkzeug (1) und dem Werkstück (W) wirkt, und eine wirkkraftbasierte Drehsteuereinrichtung zum Steuern einer Drehgeschwindigkeit des Servomotors (19) aufweist, der die Rollen (17, 18) dreht, gemäß einer Erfassungsausgabe des Kraftsensors.

9. Die Werkzeugmaschine mit einer Spanverarbeitungsfunktion gemäß Anspruch 1, **dadurch gekennzeichnet, dass** sie eine Spanverarbeitungseinrichtung (12) zum Abtrennen oder Aufwickeln des Spans (10) aufweist, der die Zugkraftausübungseinrichtung (11) durchlaufen hat.

## Revendications

1. Machine-outil avec un outil de coupe et une fonction de traitement de copeau qui amène un outil de coupe (1) en contact en aboutement avec une pièce à usiner (W) pour la coupe, la machine-outil comprenant:
un moyen d'application de force de traction (11) prévu sur ou au voisinage de l'outil de coupe (1) à travers lequel est passé un copeau (10) qui continue à partir de la pièce à usiner (W) et circule à partir d'une ligne de bord tranchant (5) de l'outil de coupe (1), tout en appliquant une force de traction sur le copeau (10), et
un moyen de guidage de copeau destiné à guider le copeau (10) vers le moyen d'application de force de traction (11),
dans laquelle l'outil de coupe (1) comprend une face de coupe (4) qui est plane ou une surface courbe faisant saillie, de sorte qu'une section transversale de la face de coupe (4) qui est perpendiculaire à la ligne de bord tranchant (5) soit une courbe faisant saillie,
dans laquelle le moyen de guidage de copeau comporte une partie en forme de guide (7; 7a) prévue sur la face de coupe (4) et s'étendant de manière linéaire à une distance de la ligne de bord tranchant (5) situé sur un bord de la face de coupe (4) ou au voisinage de la ligne de bord tranchant (5) par rapport à la ligne de bord tranchant (5) pour guider le copeau (10), et
dans laquelle la partie en forme de guide (7; 7a) est en retrait ou en saillie par rapport à la face de coupe (4), de sorte que, pendant un processus de formation de copeau, une partie (10a) du copeau (10) qui circule sur la face de coupe (4) soit déformée plastiquement de manière à s'adapter à la partie en forme de guide (7; 7a) et à être guidée par la partie déformée plastiquement (10a).

2. Machine-outil avec une fonction de traitement de copeau selon la revendication 1, **caractérisée par le fait que** le moyen de guidage de copeau comporte un couvercle (6) recouvrant la face de coupe (4) de l'outil de coupe (1) de manière à former un trajet de guidage entre la face de coupe (4) et le couvercle (6) à travers lequel passe le copeau (10).

3. Machine-outil avec une fonction de traitement de copeau selon la revendication 1, **caractérisée par le fait que** la face de coupe (4) de l'outil de coupe (1) est formée sous forme de surface courbe en saillie.

4. Machine-outil avec une fonction de traitement de copeau selon la revendication 1, **caractérisée par le fait que** le moyen de guidage de copeau comporte par ailleurs un mécanisme de changement de position d'outil (64) changeant une position de l'outil de coupe (1) par rapport à la pièce à usiner (W), et un moyen de commande de position d'outil (65) destiné à permettre que le mécanisme de changement de position d'outil (64) effectue une opération de changement de position selon une règle établie.

5. Machine-outil avec une fonction de traitement de copeau selon la revendication 1, **caractérisée par** ailleurs par le fait qu'elle comprend:
une source d'entraînement (37) permettant que l'outil de coupe (1) effectue la coupe et alimentant l'outil de coupe (1),
dans laquelle le moyen de guidage de copeau comporte par ailleurs un moyen de commande de direction de circulation de copeau (63) destiné à commander la source d'entraînement (37) pour réguler un rapport entre une quantité de coupe et une quantité d'alimentation selon un rapport établi, et
dans laquelle le rapport établi spécifie qu'une direction de circulation du copeau (10) déterminée par la quantité de coupe, la quantité d'alimentation et une forme de l'outil est tel que le copeau (10) soit dirigé vers une plage dans laquelle le copeau (10) peut recevoir une partie de pointe de copeau du moyen d'application de force de traction (11).

6. Machine-outil avec une fonction de traitement de copeau selon la revendication 1, **caractérisée par le fait que** le moyen d'application de force de traction (11) comprend une paire de rouleaux (17, 18) qui peuvent tourner avec le copeau (10) pris en sandwich entre les rouleaux (17, 18) et un moteur d'asservissement (19) faisant tourner l'un des deux rouleaux (17, 18).

7. Machine-outil avec une fonction de traitement de copeau selon la revendication 6, **caractérisée par le fait qu'**elle comporte le moyen de commande de rotation synchronisée de coupe destiné à commander une vitesse de rotation du moteur d'asservissement (19) faisant tourner les rouleaux (17, 18) de sorte qu'une vitesse à laquelle le copeau (10) est tiré par la rotation des rouleaux (17, 18) soit égale à une vitesse de coupe à laquelle la pièce à usiner tournante (W) est coupée par l'outil de coupe (1) sur base d'un mouvement relatif entre l'outil de coupe (1) et la pièce à usiner (W).

8. Machine-outil avec une fonction de traitement de copeau selon la revendication 6, **caractérisée par le fait qu'**elle comporte un capteur de force mesurant une force de coupe agissant entre l'outil de coupe (1) et la pièce à usiner (W), et un moyen de commande de rotation à base de force d'action destiné à commander une vitesse de rotation du moteur d'asservissement (19) faisant tourner les rouleaux (17, 18) selon une sortie de détection du capteur de force.

9. Machine-outil avec une fonction de traitement de copeau selon la revendication 1, **caractérisée par le fait qu'**elle comporte un moyen de traitement de copeau (12) destiné à sectionner ou enrouler le copeau (10) ayant traversé le moyen d'application de force de traction (11).
